(19) Europäisches Patentamt
European Patent Office
Office européen des brevets

(11) **EP 1 748 305 A1**

(12) **EUROPEAN PATENT APPLICATION**
published in accordance with Art. 158(3) EPC

(43) Date of publication:
**31.01.2007 Bulletin 2007/05**

(51) Int Cl.:
**G02B 5/00** (2006.01)   **G02B 5/32** (2006.01)
**G02B 27/02** (2006.01)

(21) Application number: **05728576.9**

(22) Date of filing: **11.04.2005**

(86) International application number:
**PCT/JP2005/007038**

(87) International publication number:
**WO 2005/111669 (24.11.2005 Gazette 2005/47)**

(84) Designated Contracting States:
**FR GB**

(30) Priority: **17.05.2004 JP 2004146579**
**03.12.2004 JP 2004351327**

(71) Applicant: **NIKON CORPORATION**
**Tokyo 100-8331 (JP)**

(72) Inventor: **HIRAYAMA, Yoshikazu,**
**NIKON CORPORATION**
**Tokyo 1008331 (JP)**

(74) Representative: **Whitlock, Holly Elizabeth Ann et al**
**R.G.C. Jenkins & Co.**
**26 Caxton Street**
**GB-London SW1H 0RJ (GB)**

(54) **OPTICAL ELEMENT, COMBINER OPTICAL SYSTEM, AND IMAGE DISPLAY UNIT**

(57) A light-propagating optical element having its internal reflection function and a see-through feature not damaged even if a member higher in reflective index than a surrounding medium is brought into close contact with the surface thereof. The optical element is **characterized by** comprising a plane substrate through the inside of which a predetermined light flux can propagate, and an optical function unit that is situated in close contact with the surface of the plane substrate the propagating predetermined light flux can reach, and has interfering or diffracting actions of reflecting the predetermined light flux and transmitting an external optical flux reaching the surface. This optical element, when used, can realize a combiner optical system that can easily mount functions such as a diopter correction, and an image display unit that can easily mount functions such as a diopter correction.

Fig. 2

EP 1 748 305 A1

**Description**

*TECHNICAL FIELD*

The present invention relates to a light-propagating optical element having a see-through feature, a combiner optical system using the optical element, and an image display unit using the combiner optical system.

*BACKGROUND ART*

A high-refractive index material (transparent substrate) such as a glass substrate existing in a low-refractive index medium such as air, vacuum, or other gas causes internal reflection of a light flux that is incident thereon at an angle larger than a critical angle unique to the transparent substrate, while transmitting a light flux that is incident thereon at an angle smaller than the critical angle. That is, it has an internal reflection function and a see-through feature.
One of image display units utilizing this transparent substrate as a light-propagating optical element is an eyeglass display (Patent document 1, Patent document 2, and so on).

In the eyeglass display, a transparent substrate is disposed in front of an eye of a viewer, and an image-carrying light flux from an image-display element propagates in the transparent substrate to a position immediately short of a pupil of the viewing eye, is further superimposed on an external light flux on a combiner such as a half mirror provided in the transparent substrate, and then is incident on the pupil.
Such an eyeglass display enables the viewer to view images of an external field and the image-display element at the same time.

To realize widespread use of the eyeglass display, it is necessary to add the same function (diopter correction) as that of eyeglasses in addition to other various functions.
Patent document 1: Japanese Unexamined Patent Application Publication No. 2001-264682
Patent document 2: Japanese Internal Publication No. 2003-536102

*DISCLOSURE OF THE INVENTION*

*Problems to be Solved by the Invention*

However, in the eyeglass display utilizing the internal reflection function of the transparent substrate, basically, it is not possible for the transparent substrate itself to have a curved surface, thereby having a refractive power, nor is it possible to paste another refractive member having a refractive power (a piano-convex lens or a piano-concave lens with a refractive index equal to or higher than that of the transparent substrate) on a surface of the transparent substrate.
Therefore, a currently considered idea as a method of adding the diopter correction is to attach such a refractive member on the surface of the transparent substrate via an air gap, but this involves various difficulties described below.

For example, it is difficult to obtain mechanical strength while keeping an interval of the air gap with required accuracy, and moreover, the method is accompanied by an increase in the number of parts, weight, thickness, and the like, complication of manufacturing processes, and cost increase. Further, depending on a positional relation between the viewing eye and the transparent substrate, excessive light reflected by the air gap is sometimes incident on the viewing eye, which impairs visibility.
The present invention was made in view of these problems and an object thereof is to provide a light-propagating optical element having an internal reflection function and a see-through feature which are not damaged even if a member such as a refractive member higher in refractive index than a surrounding medium is brought into close contact with a surface thereof.

It is an object of the present invention to provide a combiner optical system that can be easily provided with a function such as diopter correction, and an image display unit that can be easily provided with a function such as diopter correction.

*Means for Solving the Problems*

An optical element of the present invention is characterized by including: a plane substrate that enables a predetermined light flux to propagate through its inside; and an optical function unit that is situated in close contact with a surface of the plane substrate reachable by the propagating predetermined light flux and has actions of reflecting the predetermined light flux and transmitting, interfering with, or diffracting an external light flux reaching the surface.
The optical function unit may have a property of reflecting the predetermined light flux polarized in a specific direction and transmitting a light flux polarized in another direction.

The optical function unit may have a property of reflecting, with a desired reflection characteristic, the predetermined light flux reaching the surface at an incident angle equal to or larger than a critical angle, the critical angle being determined by refractive indexes of said plane substrate and air and being a condition under which a light flux inside of the plane substrate is totally reflected.
Further, the optical function unit may have a function of reducing the external light flux without increasing attenuation of light intensity of a light path of the predetermined light flux.

A combiner optical system of the present invention is characterized by including: the optical element of the present invention in which an image-carrying light flux radiated from a predetermined image-display element propagates and which transmits the external light flux directed from an external field to a viewing eye at least in a state in which the plane substrate faces the viewing eye; and a combiner that is provided in the optical element and reflects the image-carrying light flux, which has propagated in the plane substrate, in a direction of the viewing eye and transmits the external light flux.

The optical function unit may be an optical film provided on the surface of the plane substrate and a second plane substrate may be provided on a surface of the optical film.

Further, the second plane substrate may be a refractor for diopter correction.

Further, the optical function unit may be provided on an external-side surface of the plane substrate and a whole optical system including the optical function unit and the second plane substrate may have a function of reducing the external light flux without increasing attenuation of light intensity of an optical path of the image-carrying light flux.

The second plane substrate may have a property of absorbing visible light.

Further, the optical film may have a function of reducing the external light flux without increasing attenuation of light intensity of an optical path of the image-carrying light flux.

Further, the optical film may be made of metal and/or a dielectric.

Further, the optical film may be made of a holographic optical film.

Further, a second optical film may be provided on a surface of the second plane substrate.

Further, the second optical film may be made of metal and/or a dielectric.

Further, the second optical film may be made of a holographic optical film.

Further, the second optical film may be made of an electrochromic film.

Further, the second optical film may be made of a photochromic film.

Further, a whole optical system including the optical function unit and the second plane substrate may reduce the external light flux incident on the combiner, at a higher reduction ratio than a reduction ratio at which a rest of the external light flux is reduced.

The combiner optical system of the present invention may further include a guide mirror for guiding the image-carrying light flux radiated from the image-display element, in a direction allowing the image-carrying light flux to be inner-surface reflected in the plane substrate.

An image display unit of the present invention is characterized by including: an image-display element for radiating an image-carrying light flux for image display; and the combiner optical system of the present invention for guiding the image-carrying light flux to the viewing eye.

The image display unit may further include a mounting member with which the combiner optical system is worn on a head of a viewer.

*EFFECT OF THE INVENTION*

According to the present invention, a light-propagating optical element is realized that has an internal reflection function and a see-through feature which are not damaged even if a member higher in refractive index than a surrounding medium is brought into close contact with its surface.

According to the present invention, a combiner optical system that can be easily provided with a function such as diopter correction and an image display unit that can be easily provided with a function such as diopter correction are realized.

*BRIEF DESCRIPTION OF THE DRAWINGS*

[Fig. 1] is an external view of an eyeglass display of a first embodiment;

[Fig. 2] is a schematic cross-sectional view of an optical system part of the eyeglass display of the first embodiment taken along a horizontal plane of a viewer;

[Fig. 3] is a chart showing angle characteristics of reflectance of a glass substrate existing in the air;

[Fig. 4] is a view showing an optical system for manufacturing a HOE 35;

[Fig. 5] is a chart showing angle characteristics of reflectance of a first example;

[Fig. 6] is a chart showing a wavelength characteristic of reflectance for vertical incident light of the first example;

[Fig. 7] is a chart showing wavelength characteristics of reflectance for 60° incident light of the first example;

[Fig. 8] is a chart showing angle characteristics of reflectance of a second example;

[Fig. 9] is a chart showing a wavelength characteristic of reflectance for vertical incident light of the second example;

[Fig. 10] is a chart showing wavelength characteristics of reflectance for 60° incident light of the second example;

[Fig. 11] is a chart showing angle characteristics of reflectance of a third example;

[Fig. 12] is a chart showing a wavelength characteristic of reflectance for vertical incident light of the third example;

[Fig. 13] is a chart showing wavelength characteristics of reflectance for 60° incident light of the third example;

[Fig. 14] is a chart showing a film structure of a fourth example;

[Fig. 15] is a chart showing angle characteristics of reflectance of the fourth example;

[Fig. 16] is a chart showing a wavelength characteristic of reflectance for vertical incident light of the fourth example;

[Fig. 17] is a chart showing wavelength characteristics of reflectance for 60° incident light of the fourth example;

[Fig. 18] is a chart showing a film structure of a fifth example;

[Fig. 19] is a chart showing angle characteristics of reflectance of the fifth example;

[Fig. 20] is a chart showing a wavelength characteristic of reflectance for vertical incident light of the fifth example;

[Fig. 21] is a chart showing wavelength characteristics of reflectance for 60° incident light of the fifth example;

[Fig. 22] is a schematic cross-sectional view of an optical system part of an eyeglass display of a second embodiment taken along a horizontal plane of a viewer;

[Fig. 23] is a view showing an optical system for manufacturing a HOE applied to a reinforcing reflective film 22a of the second embodiment;

[Fig. 24] is a chart showing a film structure of a sixth example;

[Fig. 25] shows wavelength characteristics of reflectance for lights at small incident angles (incident angles 0° ~ 20°) of the sixth example;

[Fig. 26] shows wavelength characteristics of reflectance for lights at large incident angles (incident angles 35°, 40°) of the sixth example;

[Fig. 27] shows angle characteristics of reflectance for lights with respective wavelengths of a dielectric optical multilayer film of the sixth example;

[Fig. 28] is a schematic cross-sectional view of an optical system part of an eyeglass display of a third embodiment taken along a horizontal plane of a viewer;

[Fig. 29] is a chart showing a film structure of a seventh example;

[Fig. 30] shows wavelength characteristics of reflectance for lights at small incident angles (incident angles 0° ~ 20°) of the seventh example;

[Fig. 31] shows wavelength characteristics of reflectance for lights at large incident angles (incident angles 35° ~ 50°) of the seventh example;

[Fig. 32] shows angle characteristics of reflectance for lights with respective wavelengths of a dielectric optical multilayer film of the seventh example;

[Fig. 33] is a schematic cross-sectional view of an optical system part of an eyeglass display of a fourth embodiment taken along a horizontal plane of a viewer;

[Fig. 34] is a schematic cross-sectional view of an optical system part of an eyeglass display of a fifth embodiment taken along a horizontal plane of a viewer;

[Fig. 35] is an exploded view of an optical system part of an eyeglass display of a sixth embodiment;

[Figs. 36] are views for explaining an eyeglass display of a seventh embodiment;

[Fig. 37] is an external view of an eyeglass display of an eighth embodiment;

[Fig. 38] is a detailed view of an optical system of the eyeglass display of the eighth embodiment;

[Fig. 39] shows a wavelength characteristic of a refractive index of an Ag layer;

[Fig. 40] shows a wavelength characteristic of an extinction coefficient of the Ag layer;

[Fig. 41] shows wavelength characteristics of reflectance and transmittance of a plane substrate 11 side of a light-reducing film 20 of the eighth embodiment;

[Fig. 42] shows angle characteristics of reflectance and transmittance of the plane substrate 11 side of the light-reducing film 20 of the eighth embodiment;

[Fig. 43] is a chart showing a film structure of a light-reducing film 20 of a first modification example of the eighth embodiment;

[Fig. 44] shows a wavelength characteristic of transmittance of the light-reducing film 20 of the first modification example of the eighth embodiment;

[Fig. 45] is a chart showing a film structure of a light-reducing film 20 of a second modification example of the eighth embodiment;

[Fig. 46] shows a wavelength characteristic of transmittance of the light-reducing film 20 of the second modification example of the eighth embodiment;

[Figs. 47](a) is a view for explaining reflection on an air-side interface of a plane substrate 11 and (b) is a view for explaining reflection on a light-reducing film 20 side interface of the plane substrate 11;

[Fig. 48] shows angle characteristics of reflectance of the plane substrate 11 side of the light-reducing films 20 of the first modification example and the second modification example;

[Fig. 49] shows a wavelength characteristic of a refractive index of titanium dioxide ($TiO_2$);

[Fig. 50] shows a wavelength characteristic of an extinction coefficient of titanium dioxide ($TiO_2$);

[Fig. 51] is a chart showing a film structure of a light-reducing film 20 of a third modification example of the eighth embodiment;

[Fig. 52] shows a wavelength characteristic of transmittance of the light-reducing film 20 of the third modification example of the eighth embodiment;

[Fig. 53] shows wavelength characteristics of reflectance of a plane substrate 11 side of the light-reducing film 20 of the third modification example of the eighth embodiment;

[Fig. 54] is an external view of an eyeglass display of a ninth embodiment;

[Fig. 55] is a detailed view of an optical system of the eyeglass display of the ninth embodiment;

[Fig. 56] is a chart showing a film structure of light-reducing films 20, 40 of the ninth embodiment;

[Fig. 57] shows a wavelength characteristic of transmittance of a center area of the light-reducing films 20, 40 and a wavelength characteristic of transmittance of a peripheral area of the light-reducing film 20;

[Fig. 58] shows a wavelength characteristic of transmittance of a center area of light-reducing films 20, 40 of a first modification example of the ninth embodiment;

[Fig. 59] shows angle characteristics of reflection of a plane substrate 11 side of the light-reducing film 20 of the first modification example of the ninth embodiment (characteristics of the center area);

[Fig. 60] is a view for explaining first exposure in manufacture of a holographic optical film;

[Fig. 61] is a view for explaining second exposure in manufacture of the holographic optical film;

[Fig. 62] is an embodiment of an eyeglass display of a tenth embodiment;

[Fig. 63] is a detailed view of an optical system of the eyeglass display;

[Fig. 64] is a chart showing the correlation between an extinction coefficient k and transmittance of a glass substrate with a 1.50 refractive index and a 1 mm thickness;

[Fig. 65] shows wavelength characteristics of reflectance of a plane substrate 11 side of a first optical film 60; and

[Fig. 66] shows angle characteristics of reflectance of a second plane substrate 70 side of the first optical film 60.

*BEST MODE FOR CARRYING OUT THE INVENTION*

[First Embodiment]

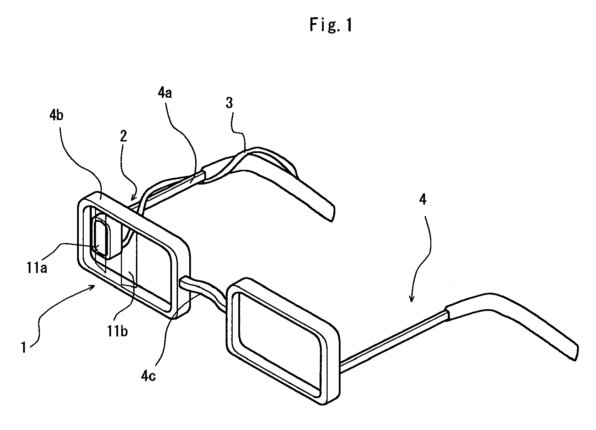

Hereinafter, a first embodiment of the present invention will be described with reference to Fig. 1, Fig. 2, Fig. 3, and Fig 4.

This embodiment is an embodiment of an eyeglass display (corresponding to an image display unit in the claims).

First, the structure of the eyeglass display will be described.

As shown in Fig. 1, the eyeglass display includes an image-display optical system 1, an image-introduction unit 2, a cable 3, and so on. The image-display optical system 1 and the image-introduction unit 2 are supported by a support member 4 similar to an eyeglass frame and are worn on the head of a viewer (the support member 4 includes a temple 4a, a rim 4b, a bridge 4c, and so on).

The image-display optical system 1 has an external appearance similar to that of an eyeglass lens and its periphery is supported by the rim 4b.

The image-introduction unit 2 is supported by the temple 4a. The image-introduction unit 2 is supplied with image signals and power via the cable 3 from an external device.

When the eyeglass display is worn, the image-display optical system 1 is disposed in front of one of the eyes (hereinafter, assumed to be the right eye and is referred to as "a viewing eye") of the viewer. Hereinafter, the eyeglass display worn by the viewer will be described based on the position of the viewer and the viewing eye.

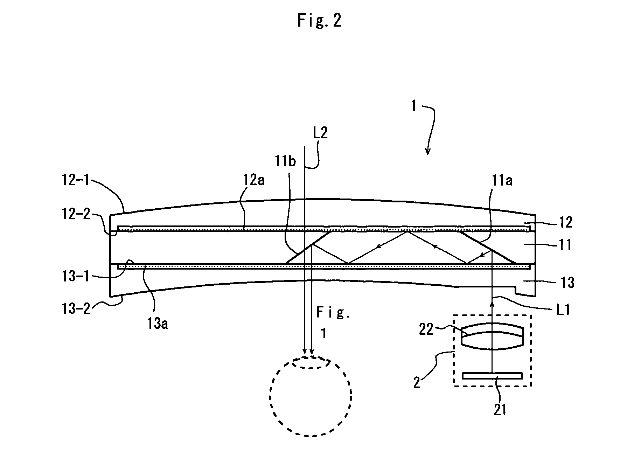

As shown in Fig. 2, the image-introduction unit 2 has therein: a liquid crystal display element 21 (corresponding to the image-display element in the claims) that displays images based on the image signals supplied via the cable 3; and an objective lens 22 having its focus near the liquid crystal display element 21.

The image-introduction unit 2 radiates an image-carrying light flux L1 (visible light), which has exited from the objective lens 22, to a right end portion of a viewer-side surface of the image-display optical system 1.

The image-display optical system 1 is composed of a plane substrate 13, a plane substrate 11, and a plane substrate 12 which are stacked in close contact in order from the viewer side.

Each of the plane substrate 13, the plane substrate 11, and the plane substrate 12 is made of a material having a property of transmitting at least visible light (for example, optical glass).

Among them, the plane substrate 11 is a plane-parallel plate that repeatedly causes the internal reflection of the image-carrying light flux L1, which is introduced from the image-introduction unit 2, on an external-side surface 11-1 and a viewer-side surface 11-2 (corresponding to the plane substrate in the claims).

The plane substrate 12 disposed on the external side of the plane substrate 11 serves a function of diopter correction of the viewing eye. The plane substrate 12 is a lens whose viewer-side surface 12-2 is flat and external-side surface 12-1 is curved.

The plane substrate 13 disposed on the viewer-side of the plane substrate 11 also serves a function of diopter correction of the viewing eye. The plane substrate 13 is a lens whose external-side surface 13-1 is flat and viewer-side surface 13-2 is curved.

Incidentally, an area through which the image-carrying light flux L1 first passes in the surface 13-2 is a flat surface having no optical power for the image-carrying light flux L1.

Further, in an area on which the image-carrying light flux L1 is first incident inside the plane substrate 11, formed is a guide mirror 11a that changes an angle of the image-carrying light flux L1 to an angle allowing it to be inner-surface reflected in the plane substrate 11.

Further, in an area, in the plane substrate 11, facing the pupil of the viewing eye, provided is a half mirror 11b (corresponding to the combiner in the claims) that reflects the image-carrying light flux L1, which has been inner-surface reflected, in a direction of the pupil.

Instead of the half mirror 11b, also usable is a HOE (which stands for holographic optical element) having a property of polarizing, in a predetermined direction, light that matches a predetermined diffraction condition. Further, the combiner may have an optical power.

Here, between the plane substrate 12 and the plane substrate 11, a substituted film 12a is disposed in close contact with the both. Further, between the plane substrate 13 and the plane substrate 11, a substituted film 13a is disposed in close contact with the both (the substituted films 12a, 13a correspond to the optical function unit in the claims).

Each of the substituted films 12a, 13a has a property of reflecting visible light incident thereon at an approximately 60° incident angle and transmitting visible light incident thereon at an approximately 0° incident angle.

Next, details of the disposition of respective surfaces of the image-display optical system 1 will be described based on behaviors of the image-carrying light flux L1.

As shown in Fig. 2, since the image-carrying light flux L1 radiated from a display screen of the liquid crystal display element 21 in the image-introduction unit 2 (only an image-carrying light flux of a center angle of view is shown) enters the plane substrate 13 via the objective lens 22 at an approximately 0° incident angle, the image-carrying light flux L1 passes through the substituted film 13a to be incident on the plane substrate 11.

The image-carrying light flux L1 entering the plane substrate 11 is incident on the guide mirror 11a at a predetermined incident angle and is reflected thereby. The reflected image-carrying light flux L1 is incident on the substituted film 13a at an incident angle θ of approximately 60°, and therefore is reflected on the substituted film 13a to be directed toward the substituted film 12a. The image-carrying light flux L1 is incident also on the substituted film 12a at the incident angle θ, and therefore is reflected also on the substituted film 12a.

Therefore, the image-carrying light flux L1 propagates in the left direction of the viewer toward a place more distant from the image-introduction unit 2 while repeating the reflection alternately on the substituted films 13a, 12a.

Thereafter, the image-carrying light flux L1 is incident on the half mirror 1 1 b to be reflected in the direction of the pupil of the viewing eye.

The reflected image-carrying light flux L1 is incident on the substituted film 13a at an approximately 0° incident angle and therefore passes through the substituted film 13a to be incident on the pupil of the viewing eye via the plane substrate 13.

An external light flux L2 from an external field (far point) is incident on the substituted film 12a via the plane substrate 12 at an approximately 0° incident angle and therefore passes through the substituted film 12a to be incident on the substituted film 13a via the plane substrate 11 at an approximately 0° incident angle. The external light flux L2 passes through the substituted film 13a to be incident on the pupil of the viewing eye via the plane substrate 13.

Here, the shape of the external-side surface 12-1 of the plane substrate 12 and the shape of the viewer-side surface 13-2 of the plane substrate 13 are set so as to make diopter correction of the viewing eye.

Incidentally, the diopter correction of the viewing eye for the external field is realized by the combination of the shapes of the surface 12-1 and the surface 13-2 which are disposed in a light path of the external light flux L2. The diopter correction of the viewing eye for an image is realized by the shape of the surface 13-2 disposed in an optical path of the image-carrying light flux L1. To realize the diopter correction of the viewing eye for an image, the position of the objective lens 22 in an optical axis direction and the position of the liquid crystal display element 21 in the optical axis direction are sometimes adjusted.

In the eyeglass display described above, the elements disposed in the optical path from the liquid crystal display element 21 to the pupil correspond to the combiner optical system in the claims.

Next, the substituted films 12a, 13a will be described in detail.

(1) Regarding the inner total reflection in the plane substrate 11

Generally, the inner total reflection in the plane substrate 11 disposed in a medium occurs when an incident angle exceeds a critical angle $\theta_c$ expressed by the following expression (1),

$$\theta_c = \arcsin[n_m/n_g] \quad \dots (1),$$

where

$n_m$ is a refractive index of the medium and $n_g$ is a refractive index of the plane substrate 11. This expression (1) shows that $n_m < n_g$ has to hold for $\theta_c$ to exist.

Therefore, direct pasting of the plane substrates 12, 13 on surfaces of the plane substrate 11 would make a refractive index of the medium too high, which does not allow $\theta_c$ to exist, so that the internal reflection function is damaged.

On the other hand, if air gaps are provided on the surfaces of the plane substrate 11, a low refractive index (nm = 1.0) of the medium (air) makes it possible to achieve the internal reflection function because the expression (1) gives the critical angle $\theta_c$ of about 40° when the material of the plane substrate 11 is typical optical glass BK7 (ng = 1.56).

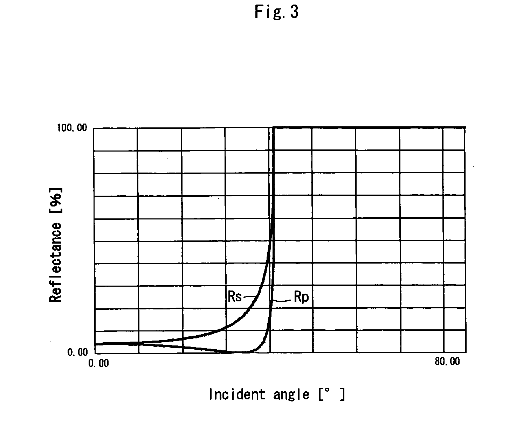

Incidentally, incident angle characteristics of reflectance of the plane substrate 11 when the air gap is used are shown in Fig. 3.

(2) Regarding a dielectric optical multilayer film

The following relation has been found out in the theory of a dielectric optical multilayer film.

A film structure (to be described below) of a symmetric film made of a dielectric optical multilayer film sandwiched by a plane substrate and a plane substrate each made of optical glass will be discussed. Here, the symmetric film refers to a film structure in which layers of various kinds are stacked centrosymmetrically. A layer group as one unit is parenthesized and its structure is shown in the parenthesis (the same applies to the description below).

plane substrate/(0.125L0.25H0.125L)$^k$/plane substrate, or

plane substrate/(0.125H0.25L0.125H)$^k$/plane substrate

In each of the layer groups, H denotes a high-refractive index layer, L denotes a low-refractive index layer, a right superscript k of each layer group denotes the number of stacks of each layer group, and the numeral written before each layer denotes an optical layer thickness for a center wavelength (nd/λ) of light incident on each layer (the same applies to the description below).

It has been known that a symmetric film can be handled as an equivalent single film (equivalent film) having a virtual refractive index, and the theory of the symmetric film and the equivalent refractive index (equivalent refractive index) of this film is described in detail in "Thin-Film optical Filters 3$^{rd}$ Edition" written by HA. Macleod, and so on, and therefore, detailed description thereof will be omitted.

In this film structure, if an equivalent refractive index of the equivalent film for vertical incident light is set to the same refractive index as that of the plane substrate 11, the equivalent film causes no interface reflection of vertical incident light and thus has 100% transmittance for this light, but it causes interface reflection of light at a large incident angle and thus has increased reflectance for this light. The reason is because an apparent refractive index N of a dielectric generally changes as follows in accordance with a travel angle θ of light in the dielectric.

$$N = n cos\theta \text{ (s-polarized light)}$$

$$N = n/cos\theta \text{ (p-polarized light)}$$

Note that n is a refractive index of the dielectric. Incidentally, an incremental amount of the reflectance in accordance with the increase in the incident angle is especially noticeable for the s-polarized light.

(3) Regarding the structure of the substituted films 12a, 13a

It is necessary for the substituted films 12a, 13a not to damage the inner reflection function of the plane substrate 11 and the see-through feature (= external visibility) of the plane substrate 11 which are mentioned in (1). That is, they need to have a property of reflecting the image-carrying light flux L1 and a property of transmitting the external light flux L2.

Therefore, the substituted films 12a, 13a are designed so as to have a property of reflecting, with high reflectance (preferably, totally reflecting), light incident thereon at a critical angle or at a larger angle than the critical angle, the critical angle being determined by a difference in refractive index between the plane substrate 11 and air.

In this embodiment, the property of the substituted films 12a, 13a is set to "the property of reflecting visible light incident thereon at an approximately 60° incident angle and transmitting visible light incident thereon at an approximately 0° incident angle". This property can be obtained by the dielectric optical multilayer film described in (2).

Therefore, in this embodiment, the dielectric optical multilayer films are used as the substituted films 12a, 13a.

A method of designing the substituted films 12a, 13a is as follows.

The structure of the substituted films 12a, 13a (the structure of a unit layer group, the number of stacks, layer thickness of each layer, refractive index of each layer, a material of each layer, and so on) is optimized according to the incident angle (here 60°) of light for which high reflectance has to be exhibited. A refractive index of the plane substrate 11 is optimized at the same time. The basic structure of the substituted films 12a, 13a is the symmetric film described in (2).

However, even when the theory described in (2) is simply applied, the resultant solution and a refractive index of an existing thin film material scarcely match each other, and therefore, all or part of the following measures are taken in designing.

A first measure is to insert several layers (matching layers) on a plane substrate 11 side for the purpose of realizing matching with the plane substrate 11.

A second measure is to absorb refractive index dispersion among materials and make fine adjustment of a spectral characteristic/angle characteristic of reflectance/transmittance of the materials at the time of the optimization.

A third measure is to break symmetry (allow asymmetry) as required.

A fourth measure is to utilize optimized design of layer thickness and automatic synthesis of the film structure by a computer.

A fifth measure is to design the films so as to have a desired characteristic only for s-polarized light (because the dielectric optical multilayer film has a property that an incremental amount of its reflectance according to the increase of an incident angle is especially noticeable for the s-polarized light).

A sixth measure is to design the films so as to exhibit a desired characteristic only for a predetermined wavelength.

Incidentally, the fifth measure is effective when a light source of the liquid crystal display element 21 shown in Fig. 2 is s-polarized. The fifth measure can be made effective also in a case of a p-polarized light source, if a polarization direction thereof is rotated by a phase plate or the like. Limiting the polarization direction is advantageous since a degree of freedom of designing is accordingly enhanced.

The sixth measure is effective when the light source of the liquid crystal display element 21 shown in Fig. 2 emits light with a specific wavelength. Limiting the wavelength is advantageous since a degree of freedom of designing is accordingly enhanced.

Next, effects of the eyeglass display will be described.

In the eyeglass display, the substituted films 12a, 13a are formed on the external side and the viewer side of the plane substrate 11.

The property of the substituted films 12a, 13a is set so that they reflect visible light incident thereon at an approximately 60° incident angle and transmit visible light incident thereon at an approximately 0° incident angle.

The plane substrate 11 sandwiched by these substituted films 12a, 13a can cause internal reflection of the image-carrying light flux L1 and can transmit the external light flux L2 from the external field (far point).

Therefore, even though the plane substrates 12, 13 with substantially the same refractive index as that of the plane substrate 11 are pasted, the internal reflection function and the see-through feature of the plane substrate 11 are not at all damaged.

As a result, it was possible for the eyeglass display to have a diopter correction by a simple method of only pasting the substrates 12, 13.

Incidentally, using a light absorbent material for the plane substrates 12, 13 enables the eyeglass display to have the function of sunglasses. In a case where only the function of the sunglasses is necessary and the diopter correction is not required, the plane substrates 12, 13 may be light-absorbent plane-parallel plates.

(Others)

In this embodiment, the image-carrying light flux L1 is visible light and the property of the plane substrate 11 and the substituted films 12a, 13a is set to the property of inner-surface reflecting the visible light, but it should be noted that, when the light source of the liquid crystal display element 21 has an emission spectrum, the property may be set so as to inner-surface reflect at least light with a peak wavelength thereof.

Further, in the eyeglass display of this embodiment, the diopter correction is realized by the two plane substrates (plane substrates 11, 12) and the two substituted films (substituted films 12a, 13a), but the diopter correction may be realized by one plane substrate and one substituted film.

Further, in this embodiment, the dielectric optical multilayer films are used as the substituted films 12a, 13a, but HOEs may be used. Details of the structure of the substituted films 12a, 13a using the dielectric optical multilayer film will be described in later-described examples, and here, a manufacturing method of the HOE will be described below.

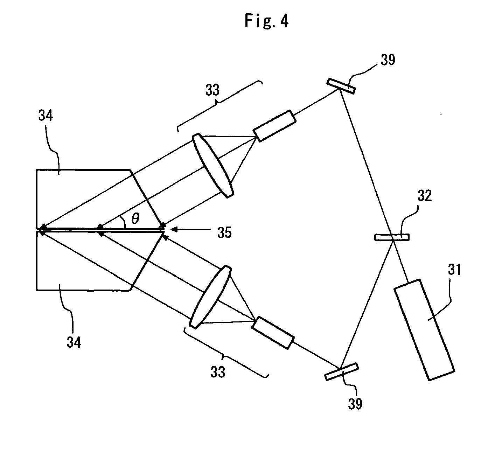

Fig. 4 shows an optical system for manufacturing the HOE. This optical system manufactures the HOE that reflects, with high reflectance, the image-carrying light flux L1 incident thereon at the incident angle θ.

A laser beam with a wavelength λ radiated from a laser light source 31 is split into two by a beam splitter 32. The two-split laser beams are expanded by two beam expanders 33 respectively and thereafter are incident on a hologram photosensitive material 35 via two auxiliary prisms 34 respectively. Consequently, the photosensitive material 35 is exposed. Here, an incident angle of the laser beams on the photosensitive material 35 is set to θ. The photosensitive material 35 is developed, so that the HOE is completed.

The completed HOE has a property of causing diffraction/reflection of a light flux with the predetermined wavelength λ that is incident thereon at the predetermined angle θ and totally transmitting light that is incident thereon at an approximately 0° incident angle.

Incidentally, the incident angle and wavelength of light for which the substituted films 12a, 13a should exhibit a reflective property are not of one kind, and therefore, the photosensitive material 35 is subjected to multiple exposure while the angle θ and the wavelength of the laser beam are varied as required.

Further, using a resin-based material (resin sheet) as the hologram photosensitive material 35 enables low-cost manufacture of the HOE having a large area. Further, if the HOE is the resin sheet, it is possible to bring the HOE into close contact with the plane substrate 11 of the eyeglass display only by pasting the HOE, which has a high practical value in terms of cost reduction and mass production.

Alternatively, an optical multilayer film made of a metal film, a semiconductor film, or the like may be used as each of the substituted films 12a, 13a of this embodiment. However, the dielectric optical multilayer film is more preferable because it absorbs less light than such an optical multilayer film.

Preferably, the optical function units described above (the dielectric optical multilayer film, the HOE, and the other optical multilayer films) are selectively used as the substituted films 12a, 13a according to the specifications and cost of the eyeglass display.

[First Example]

Hereinafter, a first example of the substituted films 12a, 13a made of the dielectric optical multilayer films will be described.

This example is an effective example when the light source of the liquid crystal display element 21 is polarized. The basic structure of this example is as follows, for instance.

plane substrate/$(0.125L0.25H0.125L)^k$/plane substrate

A refractive index of the plane substrates is 1.74, a refractive index of the high-refractive index layers H is 2.20, and a refractive index of the low-refractive index layers L is 1.48.

N-LAF35 manufactured by SCHOTT was used as the plane substrates, one of $TiO_2$, $Ta_2O_5$, and $Nb_2O_5$ was used to form the high-refractive index layers H under an adjusted film deposition condition, and $SiO_2$ was used to form the low-refractive index layers.

Incidentally, the dielectric optical multilayer film with this basic structure is generally called "a short-wavelength transmission filter". It has a characteristic of exhibiting high transmittance for light with a wavelength shorter than a predetermined wavelength and exhibiting high reflectance for light with a wavelength longer than the predetermined wavelength.

Another characteristic of a general dielectric optical multilayer film is that its spectral characteristic shifts to a short-wavelength side according to an incident angle when light is obliquely incident thereon.

By combining these two characteristics, a transmission band of vertical incident light is made to match the whole visible spectrum (400 ~ 700 nm) in advance, and the basic structure is optimized so that a long-wavelength-side reflection band matches the whole visible spectrum (400 ~ 700 nm) when the incident angle reaches around the critical angle $\theta_c$ of the plane substrate 11. As a result of the optimization, this example had the following structure.

plane substrate/(0.125L0.28H0.15L)(0.125L0.25H0.125L)$^4$(0.15L0.28H0.125L) /plane substrate

A refractive index of the plane substrates is 1.56, a refractive index of the high-refractive index layers H is 2.30, a refractive index of the low-refractive index layers L is 1.48, and a center wavelength $\lambda$ is 850 nm.

As the plane substrates, N-BAK4 manufactured by SCHOTT was used and the high-refractive index layers H were formed of one of $TiO_2$ $Ta_2O_5$, and $Nb_2O_5$ under an adjusted film deposition condition.

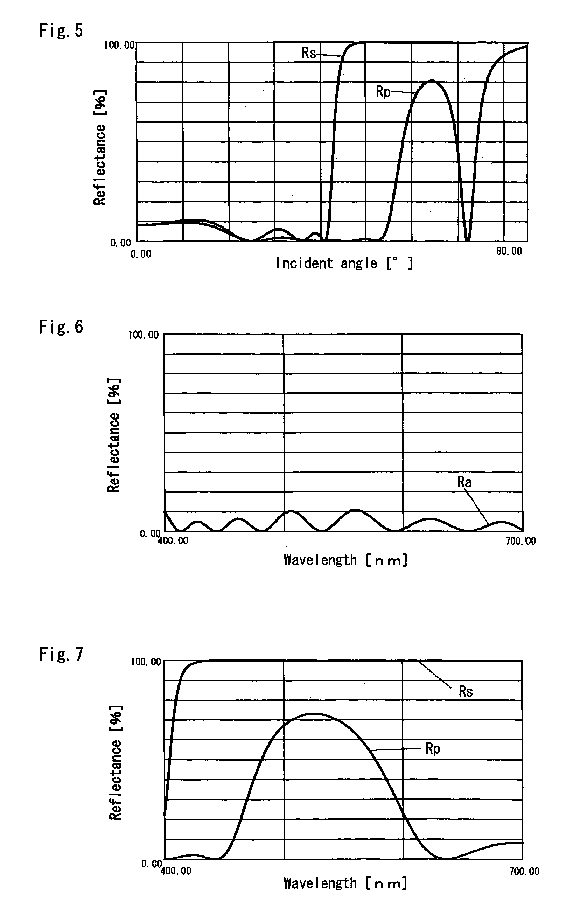

Fig. 5, Fig. 6, and Fig. 7 show angle characteristics of reflectance, a wavelength characteristic of reflectance for vertical incident light, and wavelength characteristics of reflectance for 60° incident light respectively, in this example. In the drawings described below, Rs is a characteristic for s-polarized light, Rp is a characteristic for p-polarized light, and Ra is an average characteristic for the s-polarized light and p-polarized light.

As shown in Fig. 5, the angle characteristic of reflectance of this example, when limited to the characteristic for the s-polarized light, well matches the angle characteristic of reflectance of the glass substrate (see Fig. 3). Further, as shown in Fig. 6, this example has high transmittance for vertically incident visible light. Further, as shown in Fig. 7, this example has substantially 100% reflectance for 60° incident light in the substantially whole visible spectrum.

In this example, matching layers serves, for example, to reduce ripples in the transmission band (wavelength range for which reflectance is low).

[Second Example]

Hereinafter, a second example of the substituted films 12a, 13a made of the dielectric optical multilayer films will be described.

This example is an effective example when the light source of the liquid crystal display element 21 is polarized. The basic structure is as follows, for instance.

plane substrate/(0.125H0.25L0.125H)$^k$/plane substrate

Incidentally, this structure is generally called "a long-wavelength transmission filter". It has a characteristic of exhibiting high transmittance for light with a wavelength longer than a predetermined wavelength and exhibiting high reflectance for light with a wavelength shorter than the predetermined wavelength.

As a result of the optimization, this example had the following structure.

plane substrate/(0.3H0.27L0.14H)(0.1547H0.2684L0.1547H)$^3$(0.14H0.27L0.3H)/plane substrate

A refractive index of the plane substrates is 1.56, a refractive index of the high-refractive index layers H is 2.00, a refractive index of the low-refractive index layers L is 1.48, and a center wavelength $\lambda$ is 750 nm.

One of $ZrO_2$, $HfO_2$, $Sc_2O_3$, $Pr_2O_6$, and $Y_2O_3$ was used to form the high-refractive index layers H under an adjusted film deposition condition. The same materials as those in the example previously described were used for the plane substrates and the low-refractive index layers L.

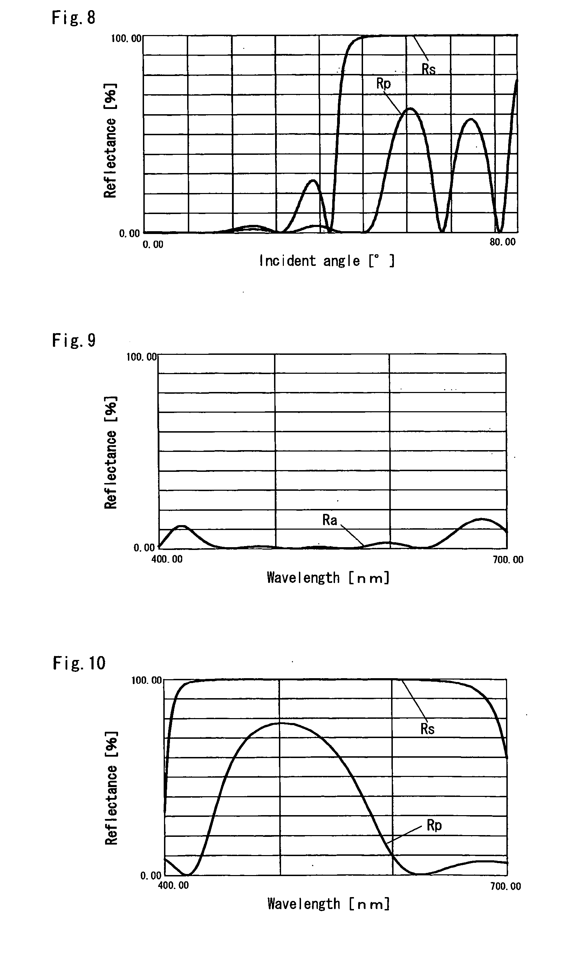

Fig. 8, Fig. 9, and Fig. 10 show angle characteristics of reflectance, a wavelength characteristic of reflectance for vertical incident light, and wavelength characteristics of reflectance for 60° incident light respectively, in this example.

As shown in Fig. 8, Fig. 9, and Fig. 10, for s-polarized light, this example can provide good characteristics, which are substantially the same as those of the first example.

In this example, the long-wavelength transmission filter was used as the basic structure. According to the theory described in (2) of the first embodiment, a short-wavelength transmission filter is suitable, but according to studies based on refractive indexes of existing thin film materials, the basic structure thus using the long-wavelength transmission filter often provides a design solution.

[Third Example]

Hereinafter, a third example of the substituted films 12a, 13a made of the dielectric optical multilayer films will be described.

This example is an effective example when the light source of the liquid crystal display element 21 is not polarized. As a result of the optimization, this example had the following structure.

plane substrate/(0.25H0.125L)(0.125L0.25H0.125L)$^4$ (0.125L0.25H)/plane substrate

A refractive index of the plane substrates is 1.75, a refractive index of the high-refractive index layers H is 2.30, a refractive index of the low-refractive index layers L is 1.48, and a center wavelength $\lambda$ is 1150 nm.

As the plane substrates, N-LAF4 manufactured by SCHOTT was used. The high-refractive index layers H were formed of one of $TiO_2$, $Ta_2O_5$, and $Nb_2O_5$ under an adjusted film deposition condition, and $SiO_2$ was deposited to form the low-refractive index layers L.

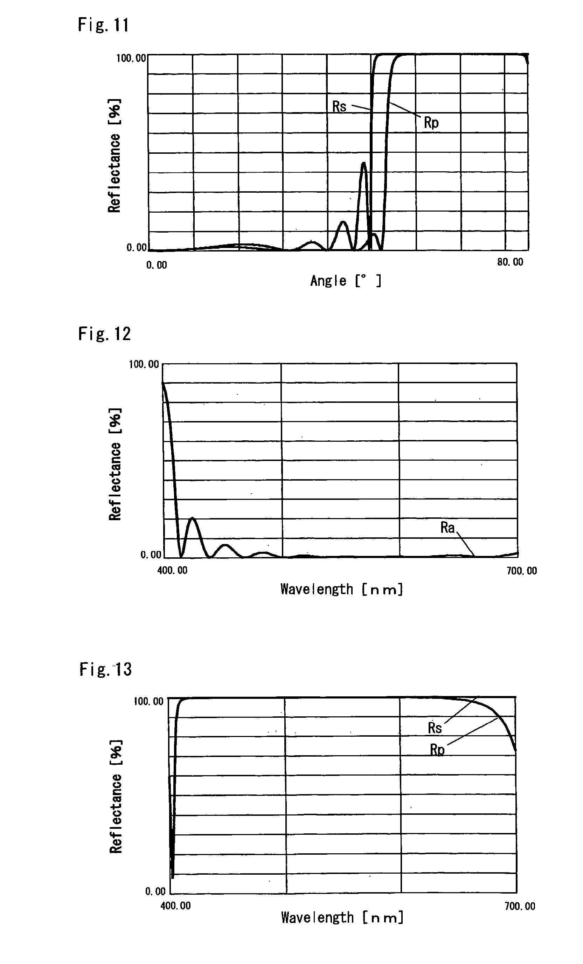

Fig. 11, Fig. 12, and Fig. 13 show angle characteristics of reflectance, a wavelength characteristic of reflectance for vertical incident light, and wavelength characteristics of reflectance for 60° incident light respectively, in this example.

As shown in Fig. 11, Fig. 12, and Fig. 13, according to this example, good characteristics can be obtained both for p-polarized light and for s-polarized light. The structure of this example is modeled as the following symmetric structure.

plane substrate/(matching layer group I)$^{k1}$. (symmetric layer group)$^{k2}$. (matching layer group II)$^{k3}$/plane substrate

Each layer group is made of repeated stacks of a low-refractive index layer L·a high-refractive index layer H (LHL or HLH) and is set to have increased reflectance for 60° incident light. The center layer group tends to reflect vertical incident light, and therefore, in order to reduce this reflection, the layer thickness of each layer in the matching layer groups I, II is adjusted by optimization.

In designing, the numbers of stacks k1, k2, k3 of the respective layer groups of this model are increased/decreased and the layer thickness of each layer in the matching layer groups I, II is adjusted, according to an incident angle of light and a refractive index of the plane substrates.

In a case where the relation with one of the plane substrates and the relation with the other plane substrate are different (such as a case where the two plane substrates are different in refractive index or an adhesive layer is interposed between this example and only one of the plane substrates), the numbers of stacks of the matching layer groups I, 11 and the thickness of each layer may be individually adjusted.

Further, at present, also in wide use is a method of optimized design of layer thickness and automatic synthesis of the film structure by a computer. When this method is used, an obtained design solution sometimes deviates slightly from the above-described basic structure. However, this can be considered as the basic structure with part thereof being adjusted (modified basic structure).

[Fourth Example]

Hereinafter, a fourth example of the substituted films 12a, 13a made of the dielectric optical multilayer films will be described.

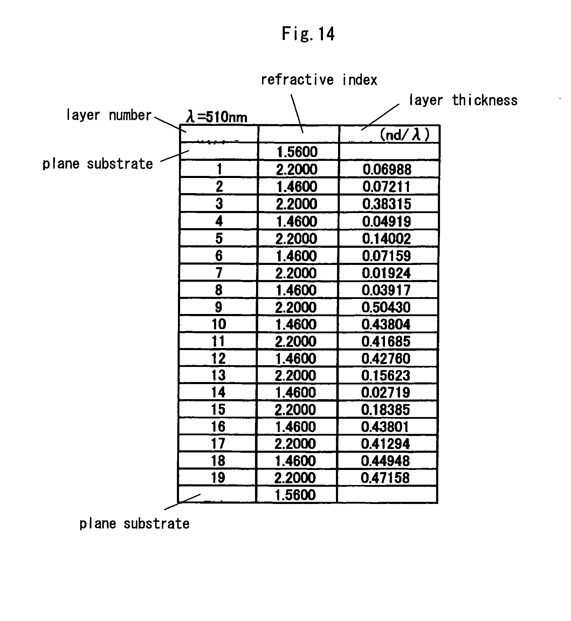

This example is an effective example when the light source of the liquid crystal display element 21 is polarized. Further, this example is an example to which the method of automatic synthesis of the film structure by a computer is applied. The basic structure of this example is shown in Fig. 14.

As shown in Fig. 14, the total number of layers is 19, a refractive index of the plane substrates is 1.56, a refractive index of the high-refractive index layers H is 2.20, a refractive index of the low-refractive index layers L is 1.46, and a center wavelength $\lambda$ is 510 nm.

As the plane substrates, N-BAK4 manufactured by SCHOTT was used and the same high-refractive index layers H as those of the first example were used. $SiO_2$ was used to form the low-refractive index layers L under an adjusted film deposition condition.

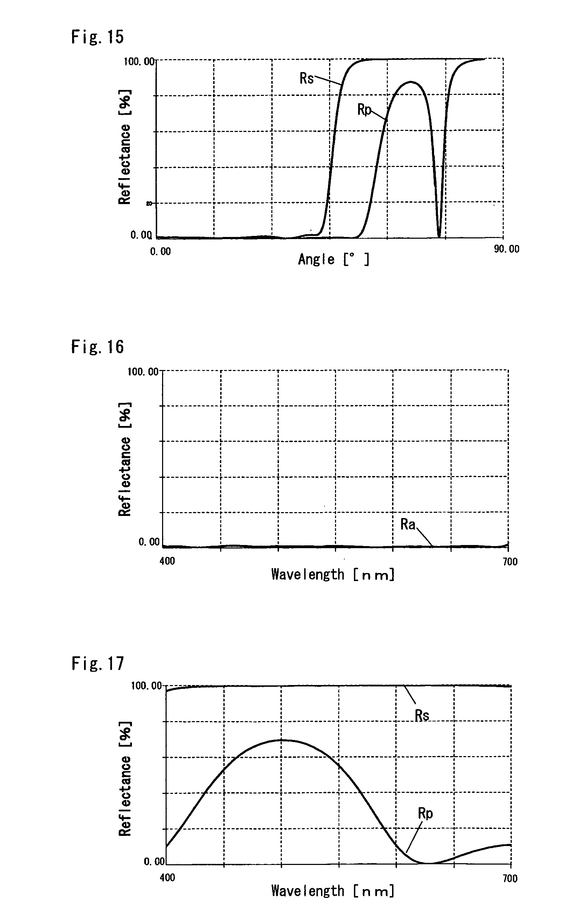

Fig. 15, Fig. 16, and Fig. 17 show angle characteristics of reflectance, a wavelength characteristic of reflectance for vertical incident light, and wavelength characteristics of reflectance for 60° incident light respectively, in this example.

As shown in Fig. 15, Fig. 16, and Fig. 17, according to this example, good characteristics can be obtained. Especially, as shown in Fig. 16, transmittance for vertical incident light is highly improved.

[Fifth Example]

Hereinafter, a fifth example of the substituted films 12a, 13a made of the dielectric optical multilayer films will be described.

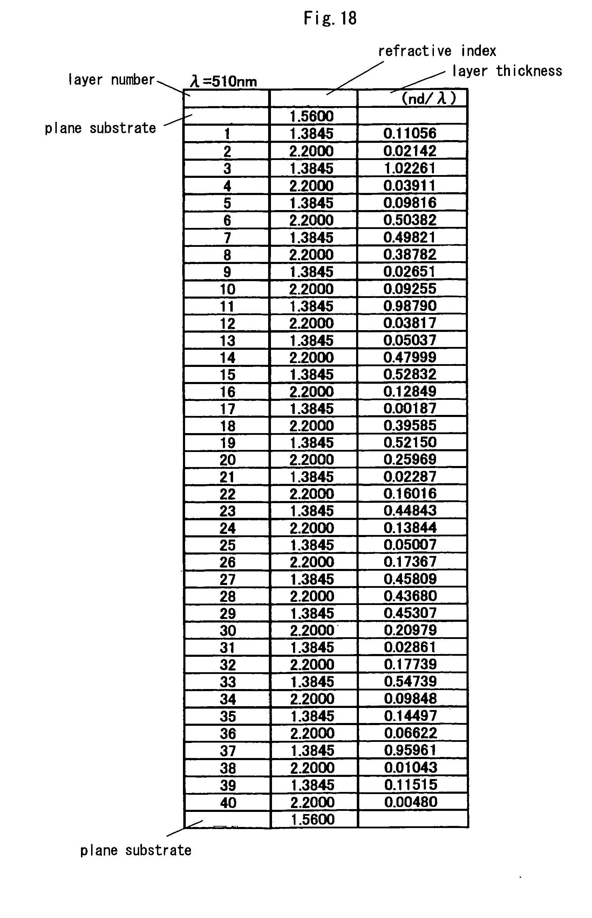

This example is an effective example when the light source of the liquid crystal display element 21 is not polarized. Further, this example is an example to which the method of automatic synthesis of the film structure by a computer is applied. The basic structure of this example is shown in Fig. 18.

As shown in Fig. 18, the total number of layers is 40, a refractive index of the plane substrates is 1.56, a refractive index of the high-refractive index layers H is 2.20, a refractive index of the low-refractive index layers L is 1.3845, and a center wavelength $\lambda$ is 510 nm.

As the plane substrates, N-BAK4 manufactured by SCHOTT was used, the same high-refractive index layers H as those of the first example were used, and one of $MgF_2$ and $AlF_2$ was used to form the low-refractive index layers L.

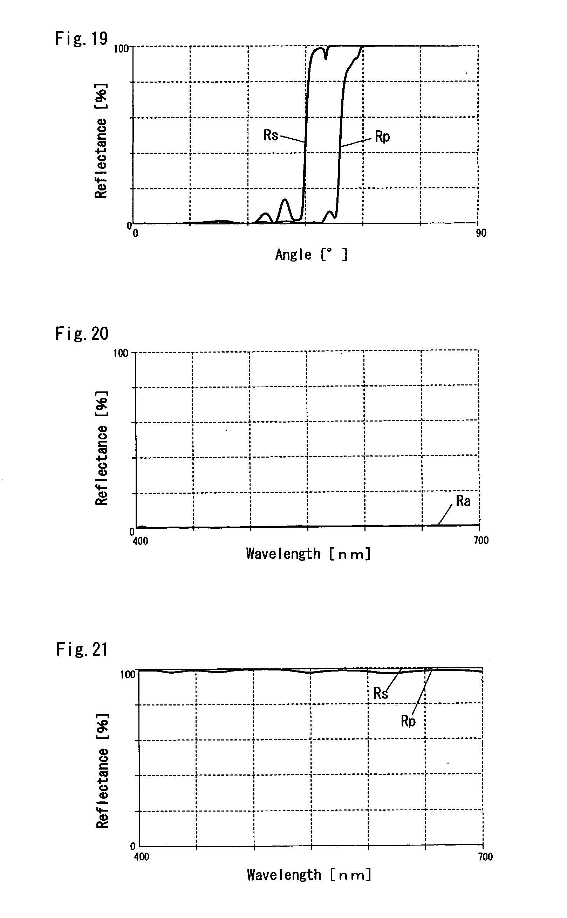

Fig. 19, Fig. 20, and Fig. 21 show angle characteristics of reflectance, a wavelength characteristic of reflectance for vertical incident light, and wavelength characteristics of reflectance for 60° incident light respectively, in this example.

As shown in Fig. 19, Fig. 20, and Fig. 21, according to this example, good characteristics can be obtained. Especially, as shown in Fig. 20 and Fig. 21, transmittance for vertical incident light and reflectance for 60° incident light are improved.

[Second Embodiment]

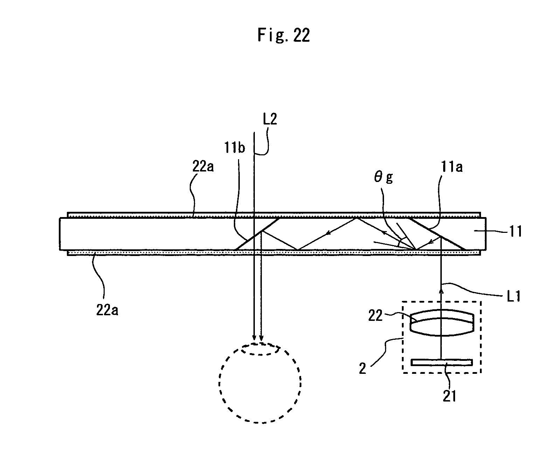

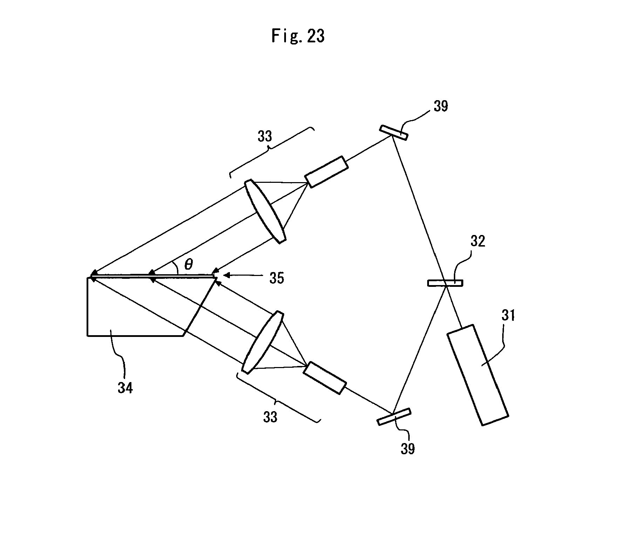

Hereinafter, a second embodiment of the present invention will be described with reference to Fig. 22 and Fig. 23. This embodiment is an embodiment of an eyeglass display. Here, what are different from the first embodiment will be mainly described.

Fig. 22 is a schematic cross-sectional view of an optical system part of the eyeglass display taken along a horizontal plane of a viewer. As shown in Fig. 22, the optical system part of the eyeglass display includes an image-introduction unit 2 and one plane substrate 11 (the image-introduction unit 2 has a liquid crystal display element 21 and an objective lens 22 mounted therein, and the plane substrate 11 has a guide mirror 11 a and a half mirror 11 b installed therein).

In the eyeglass display, reinforcing reflective films 22a are provided respectively on a viewer-side surface and an external-side surface of the plane substrate 11 to be in close contact with the respective surfaces. Each of the reinforcing reflective films 22a has at least the same function as that of the substituted films 12a, 13a (the same function as that of the air gap). Specifically, the reinforcing reflective film 22a exhibits a reflective property for an image-carrying light flux L1 (here, visible light incident at an approximately 60° incident angle) that should be inner-surface reflected in the plane substrate 11, and exhibits a transmitting property for the image-carrying light flux L1 that should pass through the plane substrate 11 and an external light flux L2 (here visible light incident at an approximately 0° incident angle).

However, an incident angle range of visible light that the reinforcing reflective film 22a can reflect is wider than an incident angle range of visible light that the substituted films 12a, 13a can reflect, and specifically, a lower limit of the incident angle range is set smaller than a critical angle $\theta_c$ ($\fallingdotseq 40°$) of the plane substrate 11, for example, is set to 35° or the like (an upper limit of the incident angle range $\theta_g$ is approximately 90° similarly to that of each of the substituted films 12a, 13a and the plane substrate 11 as a single element in the air.

The incident angle range $\theta_g$ of the image-carrying light flux I1 that the plane substrate 11 having the reinforcing reflective film 22a thereon can inner-surface reflect is larger than that when the plane substrate 11 exists in the air as a single element. The widened incident angle range $\theta_g$ results in a widened angle of view of an image that can be viewed by a viewing eye.

If the lower limit of the incident angle range of visible light that the reinforcing reflective film 22a can reflect is set too low, the following problem could occur. That is, there is a possibility that part of the external light flux L2 cannot pass through the reinforcing reflective film 22a, resulting in poor external visibility, or part of the image-carrying light flux L1 polarized by the half mirror 11b cannot be radiated to an external part (exit pupil) from the plane substrate 11, resulting in attenuation. Therefore, the lower limit of the incident angle range of visible light that can be reflected by the reinforcing reflective film 22a has to be set to an appropriate value between 0° ~ $\theta_c$, taking the angle of view of the image-carrying light flux L1 and the incident angle thereof at the time of its internal reflection into consideration.

Further, the reinforcing reflective film 22a having such a characteristic is made of a dielectric optical multilayer film, a HOE (holographic optical element), or the like. The structure of the reinforcing reflective film 22a using the dielectric optical multilayer film among them will be described in detail in a later-described example. A manufacturing method of the HOE is basically the same as the manufacturing method described in the first embodiment (see Fig. 4).

However, in this manufacturing method, as shown in Fig. 23, it is necessary to insert the auxiliary prism 32 only in one of the laser beams incident on the photosensitive material 35 (this is because one of two mediums in contact with the reinforcing reflective film 22a of this embodiment is air).

Further, a value of the angle θ (incident angle of the laser beam incident on the hologram photosensitive material 35) in the optical system in Fig. 23 is set to fall within the incident angle range of light for which the reinforcing reflective film 22a should exhibit a reflective property.

Here, the incident angle and wavelength of light for which the reinforcing reflective film 22a should exhibit a reflective property are not of one kind, and therefore, the photosensitive material 35 is subjected to multiple exposure while the angle θ and the wavelength of the laser beam are varied.

Further, the use of a resin-based material (resin sheet) as the hologram photosensitive material 35 enables low-cost manufacture of the HOE having a large area. Moreover, if the HOE is the resin sheet, it is possible to bring the HOE into close contact with the plane substrate 11 of the eyeglass display only by pasting the HOE, which has a high practical value in terms of cost reduction and mass production.

Further, as the reinforcing reflective film 22a of this embodiment, an optical multilayer film made of a metal film, a semiconductor film, or the like may be used. However, compared with such an optical multilayer film, the dielectric optical multilayer film absorbs less light and thus is more preferable.

Desirably, the optical function units described above (the dielectric optical multilayer film, the HOE, and the other optical multilayer films) are selectively used as the reinforcing reflective film 22a according to the specifications, cost, and the like of the eyeglass display.

[Sixth Example]

Hereinafter, a sixth example will be described. This example is an example of the dielectric optical multilayer film that is suitable as the reinforcing reflective film 22a of the eyeglass display of the second embodiment.

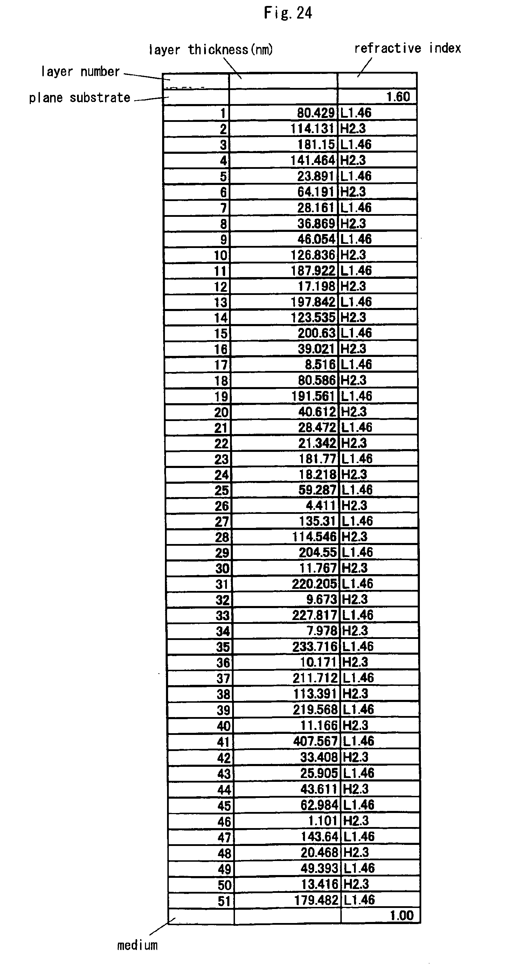

In this example, it was premised that the light source of the liquid crystal display element 21 of the eyeglass display has an emission spectrum (having peaks in R color, G color, and B color respectively), and the light source of the liquid crystal display element is polarized. Further, in this example, a method of automatic synthesis of the film structure by a computer was applied. The film structure of the dielectric optical multilayer film of this example is shown in Fig. 24.

As shown in Fig. 24, the total number of layers is 51, a refractive index of the plane substrate 11 is 1.60, a refractive index of the high-refractive index layers is 2.3, and a refractive index of the low-refractive index layers is 1.46.

N-SK14 manufactured by SCHOTT was used as the plane substrate, $TiO_2$ $Ta_2O_5$, or $Nb_2O_5$ was used to form the high-refractive index layers H under an adjusted film deposition condition. $SiO_2$ was used to form the low-refractive index layers under an adjusted film deposition condition.

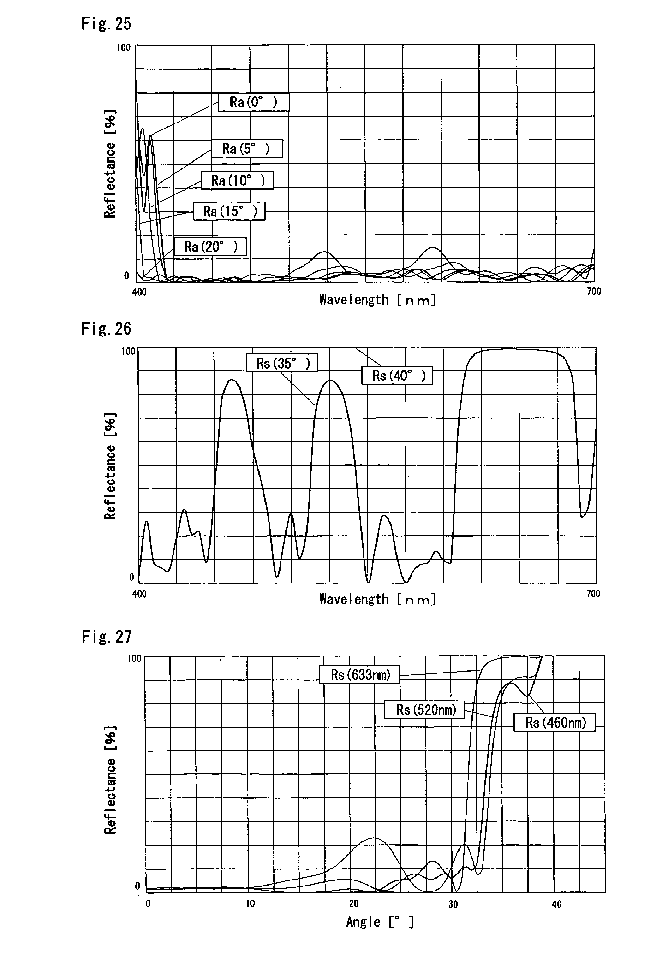

Fig. 25 shows wavelength characteristics of reflectance of the dielectric optical multilayer film of this example for lights at small incident angles (incident angles 0° ~ 20°). In Fig. 25, Ra (0°), Ra (5°), Ra (10°), Ra (15°), and Ra (20°) are reflectances for incident lights at incident angles of 0°, 5°, 10°, 15°, and 20° (each being an average value of reflectance for an s-polarized component of the incident light and reflectance for a p-polarized component of the incident light).

As is apparent from Fig. 25, the dielectric optical multilayer film of this example exhibits a transmitting property of 80% or higher for incident lights in the whole visible spectrum if incident angles of the incident lights fall within 0° ~ 20°.

Fig. 26 shows wavelength characteristics of reflectance of the dielectric optical multilayer film of this example for lights with large incident angles (incident angles 35°, 40°). In Fig. 26, Rs (35°) and Rs (40°) are reflectances for lights at incident angles of 35° and 40° (each being reflectance for an s-polarized component of the incident light).

As is apparent from Fig. 26, the dielectric optical multilayer film of this example exhibits a substantially 100% reflective property for s-polarized light in the entire visible spectrum if its incident angle is 40°. Further, for s-polarized light at a 35° incident angle, it exhibits a reflective property of 80% or higher for respective components of R color, G color, and B color in the visible spectrum (460, 520, 633 nm).

Fig. 27 shows angle characteristics of reflectance of the dielectric optical multilayer film of this example for lights with the respective wavelengths. In Fig. 27, Rs (633 nm), Rs (520 nm), and Rs (460 nm) are reflectances for lights (R color, G color, and B color) with wavelengths of 633 nm, 520 m, and 460 nm respectively (each being reflectance for an s-polarized component of the incident light).

As is apparent from Fig. 27, the dielectric optical multilayer film of this example exhibits a reflective property of 80% or higher for lights of the respective components of R color, G color, and B color in the visible spectrum, if their incident angle is 35° or larger.

As described above, 35° is a lower limit of an incident angle range of visible light (here, s-polarized lights of R color, G color, and B color) for which the dielectric optical multilayer film of this example exhibits a reflective property. This is smaller than the critical angle $\theta_c = 38.7°$ of the plane substrate 11 (refractive index 1.60) assumed in this example.

Therefore, in the eyeglass display using the dielectric optical multilayer film of this example as the reinforcing reflective film 22a, the lower limit of the incident angle range $\theta_g$ of the image-carrying light flux L1 that is inner-surface reflected in the plane substrate 11 is lowered from the critical angle $\theta_c = 38.7°$ to 35° by as large as 3.7°.

As a result, the eyeglass display can transmit the image-carrying light flux L1 at an incident angle within the incident angle range $\theta_g = 35° ~ 65°$, that is, the image-carrying light flux L1 with a 30° angle of view.

Further, as shown in Fig. 25, the dielectric optical multilayer film of this example has high transmittance for visible light at a small incident angle (0° ~ 20°), so that external visibility of the eyeglass display can be ensured, and there is no attenuation of the image-carrying light flux L1 incident on an exit pupil from the plane substrate 11.

[Third Embodiment]

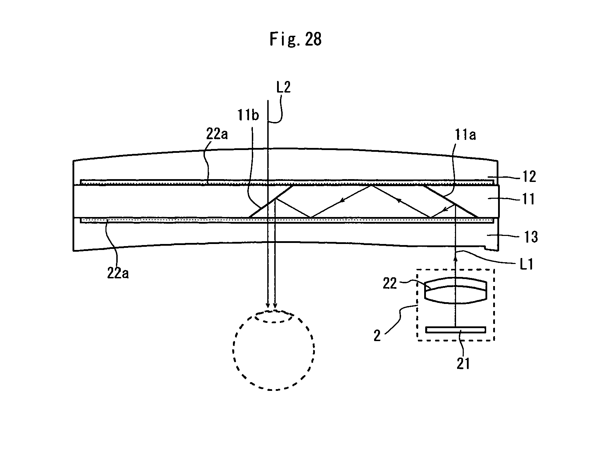

Hereinafter, a third embodiment of the present invention will be described with reference to Fig. 28. This embodiment is an embodiment of an eyeglass display. Here, what are different from the first embodiment will be mainly described.

Fig. 28 is a schematic cross-sectional view of an optical system part of the eyeglass display taken along a horizontal plane of a viewer. As shown in Fig. 28, the eyeglass display is structured such that in the eyeglass display of the first embodiment (see Fig. 2), reinforcing reflective films 22a are provided instead of the substituted films 12a, 13a.

Each of the reinforcing reflective films 22a has the same function as that of the second embodiment. That is, a lower limit of an incident angle range of visible light for which the reinforcing reflective film 22a exhibits reflectance is lower than a critical angle $\theta_c$ of a plane substrate 11.

Therefore, the eyeglass display can provide the effect of diopter correction similarly to the first embodiment and in addition can provide the effect of widening an angle of view similarly to the second embodiment.

A manufacturing method of the reinforcing reflective film in a case where it is made of a HOE is the same as the manufacturing method described in the first embodiment (see Fig. 4).

However, a value of the angle θ in the optical system in Fig. 4 (the incident angle of the laser beam incident on the hologram photosensitive material 35) is set to fall within the range of the incident angle of light for which the reinforcing reflective film 22a should exhibit a reflective property.

Here, the incident angle and wavelength of light for which the reinforcing reflective film 22a should exhibit a reflective property are not of one kind, and therefore, the photosensitive material 35 is subjected to multiple exposure while the angle θ and the wavelength of the laser beam are varied as required.

[Seventh Example]

Hereinafter, a seventh example will be described. This example is an example of a dielectric optical multilayer film that is suitable as the reinforcing reflective film 22a of the eyeglass display of the third embodiment.

In this example, it was premised that a light source of a liquid crystal display element 21 of the eyeglass display is polarized. Further, in this example, a method of automatic synthesis of the film structure by a computer was applied.

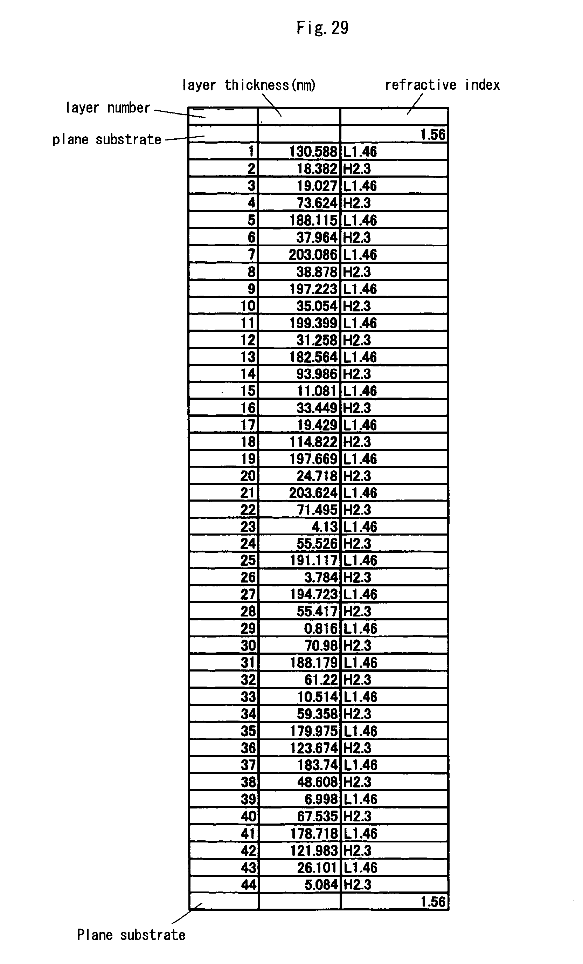

The film structure of the dielectric optical multilayer film of this example is shown in Fig. 29.

As shown in Fig. 29, the total number of layers is 44, a refractive index of the plane substrates 11 is 1.56, a refractive index of the high-refractive index layers is 2.3, and a refractive index of the low-refractive index layers is 1.46.

The plane substrates and the low-refractive index layers are the same as those of the fourth example, and $TiO_2$, $Ta_2O_5$, or $Nb_2O_5$ was used to form the high-refractive index layers H under an adjusted film deposition condition.

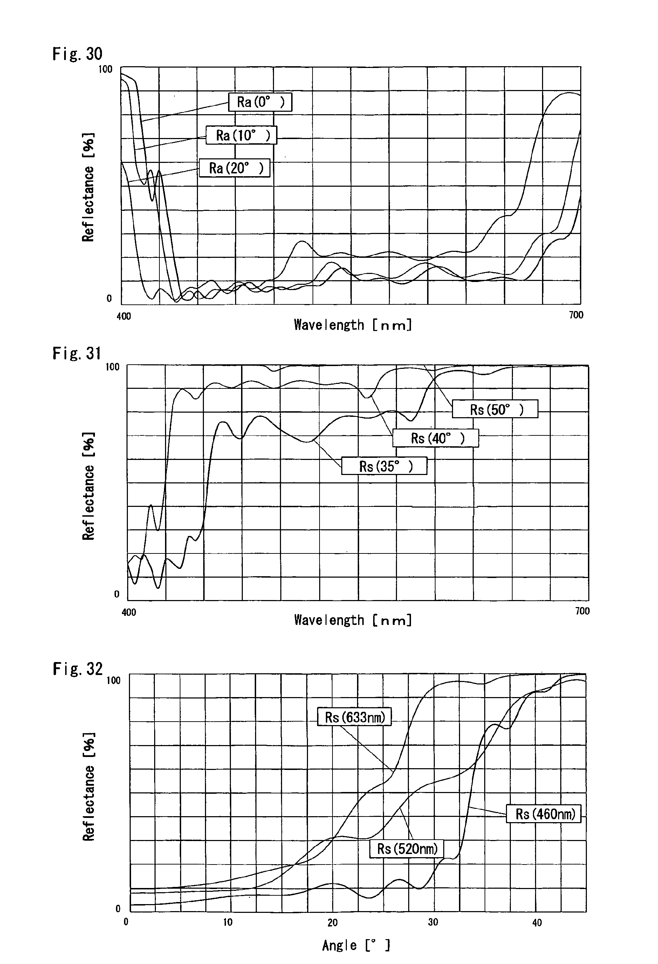

Fig. 30 shows wavelength characteristics of reflectance of the dielectric optical multilayer film of this example for lights at small incident angles (incident angles 0° ~ 20°). In Fig. 30, Ra (0°), Ra (10°), and Ra (20°) are reflectances for incident lights at incident angles of 0°, 10°, and 20° (each being an average value of reflectance for an s-polarized component of the incident light and reflectance for a p-polarized component of the incident light).

As is apparent from Fig. 30, the dielectric optical multilayer film of this example exhibits a transmitting property of 70% or higher for incident lights in substantially the whole visible spectrum if their incident angles fall within 0° ~ 20°.

Fig. 31 shows wavelength characteristics of reflectance of the dielectric optical multilayer film of this example for lights with large incident angles (incident angles 35°~ 50°). In Fig. 31, Rs (35°), Rs (40°), and Rs (50°) are reflectances for incident lights at incident angles of 35°, 40°, and 50° (each being reflectance for an s-polarized component of the incident light).

As is apparent from Fig. 31, the dielectric optical multilayer film of this example exhibits a reflective property of 65% or higher for lights in substantially the whole visible spectrum if their incident angles are 35° ~ 50°.

Fig. 32 shows angle characteristics of reflectance of the dielectric optical multilayer film of this example for lights with respective wavelengths. In Fig. 32, Rs (633 nm), Rs (520 nm), and Rs (460 nm) are reflectances for lights (R color, G color, and B color) with wavelengths of 633 nm, 520 nm, and 460 nm respectively (each being reflectance for an s-polarized component of the incident light).

As is apparent from Fig. 32, the dielectric optical multilayer film of this example exhibits a reflective property of 65% or higher for lights of the respective components of R color, G color, and B color in the visible spectrum, if their incident angles are 35° or larger.

That is, 35° is a lower limit of an incident angle range of visible light (here, s-polarized lights with wavelengths of 633 nm, 520 nm, and 460 nm) for which the dielectric optical multilayer film of this example exhibits a reflective property. This is smaller than the critical angle $\theta_c = 39.9°$ of the plane substrate 11 (refractive index 1.56) assumed in this example.

Therefore, in the eyeglass display using the dielectric optical multilayer film of this example as the reinforcing reflective film 22a, the lower limit of the incident angle range $\theta_g$ of the image-carrying light flux 11 that is inner-surface reflected in the plane substrate 11 is lowered from the critical angle $\theta_c = 39.9°$ to 35° by as much as 4.9°.

Further, as shown in Fig. 30, the dielectric optical multilayer film of this example has high transmittance for visible light at a small incident angle (0° ~ 20°), so that external visibility of the eyeglass display can be ensured, and there is no attenuation of the image-carrying light flux L1 incident on an exit pupil from the plane substrate 11.

[Fourth Embodiment]

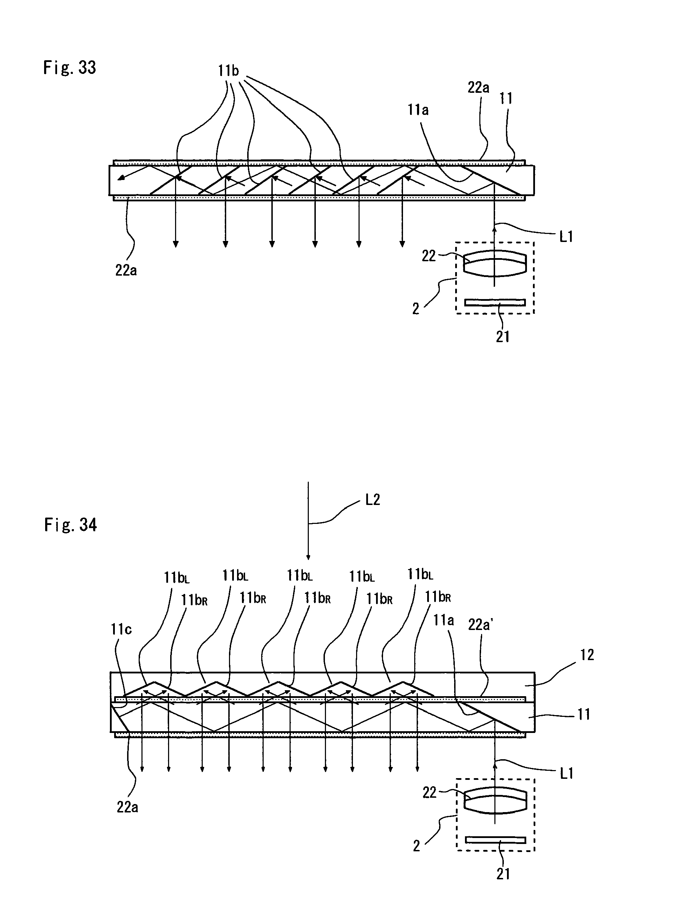

Hereinafter, a fourth embodiment of the present invention will be described with reference to Fig. 33. In this embodiment, the aforesaid reinforcing reflective film is applied to an eyeglass display with a large exit pupil. Fig. 33 is a schematic cross-sectional view of an optical system part of the eyeglass display of this embodiment taken along a horizontal plane of a viewer. As shown in Fig. 33, the eyeglass display has a plurality of half mirrors 11 b parallel to one another which are provided in a plane substrate 11 in which an image-carrying light flux L1 is inner-surface reflected. Each of the plural half mirrors 11 b reflects light incident at an incident angle within a predetermined angle range, in the image-carrying light flux L1 inner-surface reflected in the plane substrate 11, and forms an exit pupil outside the plane substrate 11. The size of the exit pupil is increased accordingly by providing the plural half mirrors 11b. Such a large exit pupil is advantageous in terms of enhancing a degree of freedom of the position of the pupil of a viewing eye.

In this eyeglass display, reinforcing reflective films 22a are formed on a viewer-side surface and an external-side surface of the plane substrate 11 respectively so as to be in close contact therewith. As in the above-described embodiments, the reinforcing reflective films 22a widen a range of an incident angle allowing the image-carrying light flux L1 to be inner-surface reflected in the plane substrate 11. Accordingly, an angle of view of this eyeglass display is also widened.

[Fifth Embodiment]

Hereinafter, a fifth embodiment of the present invention will be described with reference to Fig. 34. In this embodiment, the aforesaid reinforcing reflective film is applied to an eyeglass display with a large exit pupil.

Fig. 34 is a schematic cross-sectional view of an optical system part of the eyeglass display of this embodiment taken along a horizontal plane of a viewer. As shown in Fig. 34, in the eyeglass display, a plurality of half mirrors for forming a large exit pupil are provided outside a plane substrate 11. The plural half mirrors are provided in a plane substrate 12 that is disposed on an external side or a viewer side (external side in Fig. 34). Further, the plural half mirrors are composed of two kinds, namely, a plurality of half mirrors $11b_L$ parallel to one another and a plurality of half mirrors $11b_R$ parallel to one another and different in posture from the plural half mirrors $11b_L$.

Inside the plane substrate 11, provided are: a guide mirror 11a for polarizing an image-carrying light flux L1 incident on the plane substrate 11 to an angle allowing the image-carrying light flux L1 to be inner-surface reflected; and a return mirror 11c turning back the image-carrying light flux 11 that has been inner-surface reflected in the plane substrate 11. By the operation of the return mirror 11c, the image-carrying light flux L1 of the eyeglass display reciprocates while being inner-surface reflected in the plane substrate 11.
The posture of the half mirrors $1b_L$ among the plural half mirrors is set so that the image-carrying light flux L1 on the onward route is polarized toward the viewer side, and the posture of the other half mirrors $11b_R$ is set so that the image-carrying light flux L1 on the return route is polarized toward the viewer side. Therefore, the whole structure of the plural half mirrors $11b_L$, $11b_R$ is the structure in which roof-shaped half mirrors are arranged close to one another.

In this eyeglass display, the reinforcing reflective films are provided between the plane substrate 12 and the plane substrate 11 and on a viewer-side surface of the plane substrate 11 to be in close contact therewith. Among them, a reinforcing reflective film 22a on the viewer side of the plane substrate 11 is the same as those of the above-described embodiments and exhibits a reflective property for the image-carrying light flux L1 that is inner-surface reflected in the plane substrate 11.
On the other hand, a reinforcing reflective film 22a' on the external side of the plane substrate 11 is slightly different from those of the above-described embodiments and exhibits a semi-transmitting property for the image-carrying light flux L1 that is inner-surface reflected in the plane substrate 11.

Specifically, the reinforcing reflective film 22a' exhibits a transmitting property (total transmittance) for the image-carrying light flux L1 that should pass through the plane substrate 11 and an external light flux L2 (here, visible light incident at an approximately 0° incident angle), and exhibits a semi-transmitting property for the image-carrying light flux L1 that should be inner-surface reflected in the plane substrate 1 (here, visible light incident at an approximately 60° incident angle). A lower limit of an incident angle range of the light for which it exhibits the semi-transmitting property is set to a value smaller than a critical angle $\theta_c$ of the plane substrate 11.

Owing to the semi-transmitting property of the reinforcing reflective film 22a', a certain ratio of the image-carrying light flux L1 reciprocating in the plane substrate 11 propagates toward the plane substrate 12 side. The propagating image-carrying light flux L1 is polarized by the plural half mirrors $11bb$ $11b_R$ in the plane substrate 12 toward the viewer side. Then, the image-carrying light flux L1 polarized by the plural half mirrors $11b_L$, $11b_R$ passes through the reinforcing reflective film 22a', the plane substrate 11, and the reinforcing reflective film 22a to form a large exit pupil.

Further, the reinforcing reflective films 22a, 22a' described above widen the range of an incident angle allowing the image-carrying light flux L1 to be inner-surface reflected, similarly to those of the above-described embodiments. Accordingly, an angle of view of the eyeglass display is also widened.
In the eyeglass display, the return mirror 11c and two kinds of the half mirrors are provided, but it should be noted that the return mirror 11c and the half mirrors $11b_R$ can be omitted. However, providing these mirrors makes light intensity in the exit pupil uniform and thus is more preferable.

[Sixth Embodiment]

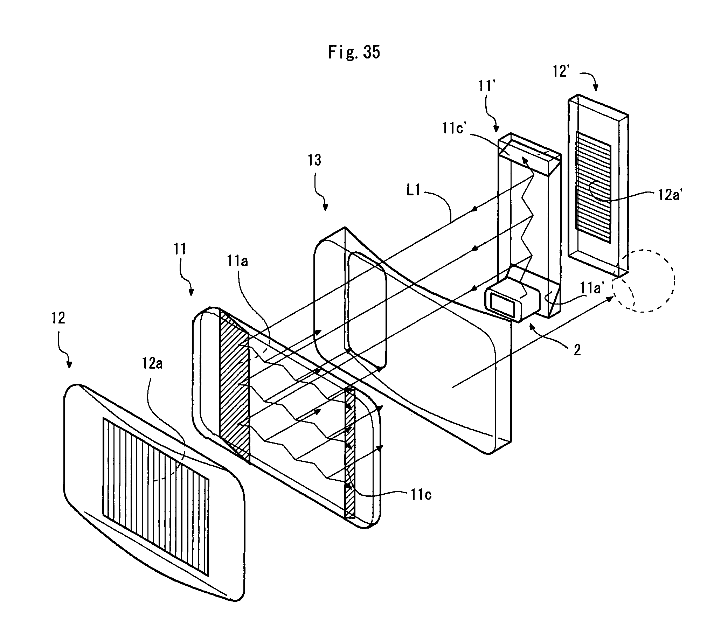

Hereinafter, a sixth embodiment of the present invention will be described with reference to Fig. 35. In this embodiment, the aforesaid reinforcing reflective film is applied to an eyeglass display with a still larger exit pupil.
Fig. 35 is an exploded view of an optical system part of the eyeglass display of this embodiment. As shown in Fig. 35, the same principle as that of the eyeglass display of the fifth embodiment is applied to this eyeglass display, and an exit pupil is expanded in two vertical and horizontal directions when viewed from a viewer. Further, this eyeglass display is also provided with a function of diopter correction of a viewing eye.

In Fig. 35, an image-carrying light flux L1 radiated from an image-introduction unit 2 is first incident on a plane substrate 11'. The plane substrate 11' together with a plane substrate 12' guides the image-carrying light flux L1 and expands a diameter of the image-carrying light flux L1 in the vertical direction when viewed from the viewer. The image-carrying light flux L1 is incident on a plane substrate 11. The plane substrate 11 together with a plane substrate 12 guides the image-carrying light flux L1 to expand the diameter of the image-carrying light flux L1 in the horizontal direction when viewed from the viewing eye.

Further, a plane substrate 13 is provided on a viewer side of the plane substrate 11, and optical powers of a viewing-eye-side surface of the plane substrate 13 and an external-side surface of the plane substrate 12 achieve diopter correction of the viewing eye for an external field.

The same principle as that of the plane substrates 11, 12 of the fifth embodiment is applied to a first optical system composed of the plane substrates 11', 12' and a second optical system composed of the plane substrates 11, 12. Further, an arrangement direction of optical surfaces of the first optical system is rotated from an arrangement direction of optical surfaces of the second optical system by 90°.

Specifically, in the plane substrate 11', the reference symbol 11a' denotes a guide mirror that polarizes the image-carrying light flux L1 incident on the plane substrate 11' to an angle allowing the image-carrying light flux L1 to be inner-surface reflected, and the reference 11c' denotes a return mirror turning back the image-carrying light flux L1 that has been inner-surface reflected in the plane substrate 11'. In the plane substrate 12', the reference symbol 12a' denotes a plurality of roof-shaped half mirrors arranged close to one another (for details, see Fig. 34).

In the plane substrate 11, the reference symbol 11a denotes a guide mirror that polarizes the image-carrying light flux L1 incident on the plane substrate 11 to the angle allowing the image-carrying light flux L1 to be inner-surface reflected, and the reference symbol 11c denotes a return mirror turning back the image-carrying light flux L1 that has been inner-surface reflected in the plane substrate 11. In the plane substrate 12, the reference symbol 12a denotes a plurality of roof-shaped half mirrors that are arranged close to one another (for details, see Fig. 34).

In the above-described eyeglass display, the reinforcing reflective films are provided between the plane substrate 11' and the plane substrate 12', between the plane substrate 11' and the plane substrate 13', between the plane substrate 11 and the plane substrate 12, and between the plane substrate 11 and the plane substrate 13.

However, the reinforcing reflective film provided between the plane substrate 11' and the plane substrate 12' needs to have a characteristic of allowing a certain ratio of the image-carrying light flux L1, which is inner-surface reflected in the plane substrate 11', to propagate therethrough to the plane substrate 12'. This characteristic is the same as the characteristic of the reinforcing reflective film 22a' of the fifth embodiment.

The reinforcing reflective film provided between the plane substrate 11 and the plane substrate 12 also needs to have a characteristic of allowing a certain ratio of the image-carrying light flux L1, which is inner-surface reflected in the plane substrate 11, to propagate therethrough to the plane substrate 12. This characteristic is the same as the characteristic of the reinforcing reflective film 22a' of the fifth embodiment.

The above-described reinforcing reflective films widen a range of an incident angle allowing the image-carrying light flux L1 to be inner-surface reflected in the plane substrate 11' and a range of an incident angle allowing the image-carrying light L1 to be inner-surface reflected in the plane substrate 11, respectively. Moreover, a widening direction in the plane substrate 11' and a widening direction in the plane substrate 11 are 90° different.

Therefore, in this eyeglass display, an angle of view in the vertical direction and an angle of view in the horizontal direction are both widened.

[Seventh Embodiment]

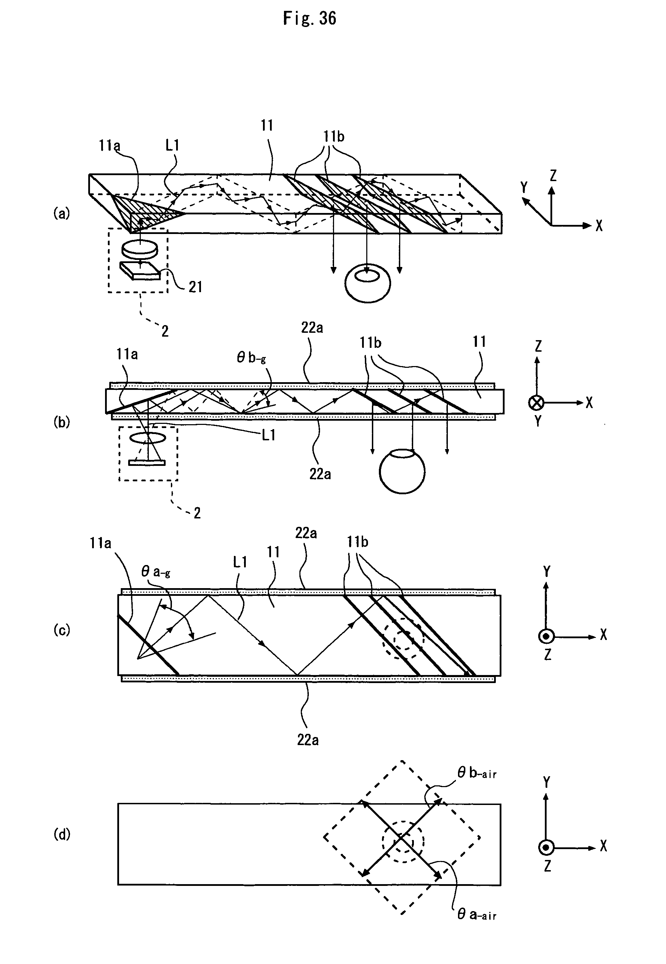

Hereinafter, a seventh embodiment of the present invention will be described with reference to Figs. 36. In this embodiment, the aforesaid reinforcing reflective film is applied to an eyeglass display in which many surfaces are used for internal reflection.

Fig. 36(a) is a schematic perspective view of an optical system part of the eyeglass display. Fig. 36(b) is a schematic cross-sectional view of the optical system part taken along a horizontal plane (a ZX plane in Fig. 36(a)) of a viewer. Fig. 36(c) is a schematic cross-sectional view of the optical system part taken along a plane in front of the viewer (a YX plane in Fig. 36(a)). Fig. 36 (d) is a view for explaining an angle of view of the eyeglass display.

As shown in Figs. 36(a), (b), and (c), in this eyeglass display, by adjusting the arrangement places and postures of a guide mirror 11 a and a plurality of half mirrors 11b, totally 4 surfaces in the plane substrate 11 are used for the internal reflection, the four surfaces being a viewer-side surface, an external-side surface, and two surfaces sandwiched by the both surfaces. Incidentally, these four surfaces are all planar surfaces.

Fig. 36(d) shows angles of view $\theta b_{-air}$, $\theta a_{-air}$ in two directions of an image of the eyeglass display when viewed from a viewing eye.

Out of these, the angle of view $\theta b_{-air}$ is determined by an angle range $\theta b_{-g}$ allowing the image-carrying light flux L1 to be inner-surface reflected on the two surfaces, namely, the viewer-side surface and the external-side surface of the plane substrate 11, as shown in Fig. 36(b).

The angle of view $\theta a_{-air}$ is determined by an angle range $\theta a_{-g}$ allowing the image-carrying light flux L1 to be inner-surface reflected on the other two surfaces of the plane substrate 11, as shown in Fig. 36(c).

These are expressed by the following expressions.

$$\theta a_{-air} = \sin^{-1}[n_g \sin \theta a_{-g}]$$

$$\theta b_{-air} = \sin^{-1}[n_g \sin \theta b_{-g}]$$

That is, the angles of view $\theta a_{-air}$, $\theta b_{-air}$ become larger as the angle ranges $\theta a_{-g}$, $\theta b_{-g}$ allowing the image-carrying light flux L1 to be inner-surface reflected in the plane substrate 11 are larger.

In the eyeglass display, the reinforcing reflective films are provided on the four surfaces of the plane substrate 11 used for the internal reflection. In Figs. 36(b), (c), the reference symbol 22a denotes the reinforcing reflective films. The characteristic of the reinforcing reflective film 22a is the same as that of the reinforcing reflective films 22a in the above-described embodiments, and a lower limit of an incident angle range of visible light for which the reinforcing reflective film 22a exhibits a reflective property is lower than the critical angle $\theta$ of the plane substrate 11.

Therefore, the angle ranges $\theta b_{-g}$, $\theta a_{-g}$ (Figs. 36 (b), (c)) allowing the image-carrying light flux L1 to be inner-surface reflected in the plane substrate 11 are widened. As a result, the angles of view $\theta a_{-air}$, $\theta b_{-air}$ (Fig. 36 (d)) of the eyeglass display are also widened.

Incidentally, the two reinforcing reflective films 22a shown in Fig. 36(c) do not face the viewing eye, and therefore need not transmit an external light flux. Therefore, it is preferable that a metal film of silver, aluminum, or the like is used as each of these two reinforcing reflective films 22a, instead of the aforesaid dielectric optical multilayer film or HOE. The use of the metal film can make the angle of view $\theta a_{-air}$ still larger than the angle of view $\theta b_{-air}$.

Therefore, if an aspect ratio of a liquid crystal display element 21 is not 1 : 1, the liquid crystal display element 21 is preferably disposed so that the angle of view of the longer side corresponds to the angle of view $\theta a_{-air}$.

Incidentally, the plane substrate 11 of the eyeglass display is a columnar substrate with a rectangular cross section, but also usable is a columnar substrate having a cross section in different shape such as a columnar substrate with a triangular cross section, a columnar substrate with a parallelogram cross section, or a columnar substrate with a pentagonal cross section.

[Eighth Embodiment]

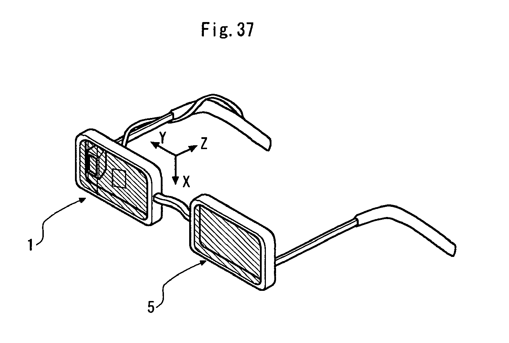

Hereinafter, an eighth embodiment of the present invention will be described based on Fig. 37, Fig. 38, Fig. 39, Fig. 40, Fig. 41, and Fig. 42. This embodiment is an embodiment of an eyeglass display. Here, what are different from the first embodiment will be mainly described.

Fig. 37 is an external view of the eyeglass display. The coordinate system in Fig. 37 is a right-handed XYZ Cartesian coordinate system in which the X direction points downward and the Y direction points rightward if viewed from a viewer wearing the eyeglass on the head. In the description below, the direction expressed by the XYZ coordinate system or the direction expressed by left, right, up, and down viewed from the viewer will be used as required.

As shown in Fig. 37, an image-display optical system 1 of the eyeglass display has a light-reducing function of reducing an external light flux directed from an external field toward a viewing eye (right eye of the viewer).

Further, in order to balance light intensity of the external light flux directed from the external field toward the viewing eye and light intensity of an external light flux directed from the external field toward a non-viewing eye (left eye of the viewer), and in order to balance right and left external appearances of the eyeglass display, a non-viewing eye side front also has a light-reducing function similar to that of the image-display optical system 1, and a plane substrate 5 having the same external appearance as that of the image-display optical system 1 is attached to the non-viewing eye side front. This does not apply to a case where there is no need to balance the external light fluxes and balance the external appearances.

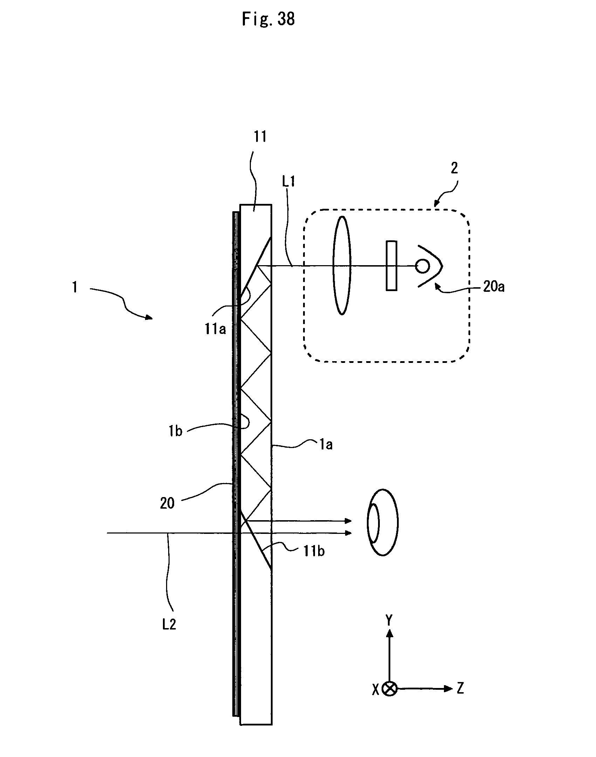

Fig. 38 is a detailed view of an optical system of the eyeglass display and is a schematic cross-sectional view of an optical system part of the eyeglass display taken along a plane parallel to a YZ plane.

In Fig. 38, the reference symbol 20a denotes an illumination optical system including an LED light source, a mirror, and so on, which is not shown in the drawing in the first embodiment.

As shown in Fig. 38, the image-display optical system 1 includes one plane substrate 11 having a transmitting property for at least visible light. At predetermined positions in the plane substrate 11, a guide mirror 11 a and a half mirror 11b similar to those of the first embodiment are provided in predetermined postures. As in the first embodiment, a possible alternative for the half mirror 11 b is a polarizing optical film, such as a polarizing beam splitter or a holographic optical film, that is transparent for an external light flux L2 consisting of visible light.

On an external-side surface 1 b of the plane substrate 11, a light-reducing film 20 reducing the external light flux L2 at a predetermined reduction ratio is formed. The function of the light-reducing film 20 reduces brightness of an external image at the predetermined ratio.

Next, a concrete example of the light-reducing film 20 will be described.

As a material of a general light-reducing film, used is a metal element such as aluminum (Al), chrome (Cr), tungsten (W), or rhodium (Ro), or an alloy of Inconel or the like.

However, these materials have a light absorbing property (absorbency), and therefore, if no consideration is given in providing the light-reducing films 20 on the surface of the plane substrate 11, a certain amount of an image-carrying light flux L1, which is inner-surface reflected in the plane substrate 11, would be absorbed by the light-reducing film 20. That is, light intensity of a light path of the image-carrying light flux L1 is greatly lost. Therefore, in order to prevent attenuation of the light intensity, a two-layer film made of a stack of a silver (Ag) film and a dielectric film is used as the light-reducing film 20 in this embodiment. The basic structure of the light-reducing film 20 is as follows:

plane substrate/Ag/0.25L/air, where

Ag: silver (Ag layer),

L: a low-refractive index dielectric (L layer), and

the numerical value on the left of the L layer: optical layer thickness of the L layer (in a center wavelength of a used wavelength range)

In this basic structure, the L layer serves to protect a surface of the Ag layer subject to deterioration in the air and improving reflectance for incident light at a large incident angle.

Details (specifications) of the light-reducing film 20 are as follows:

set transmittance: 30% (for 0-degree incident angle),
center wavelength $\lambda c$: 500 nm,
refractive index of the plane substrate: 1.56,
layer thickness of the Ag layer: 30 nm, and
refractive index of the L layer: 1.46.

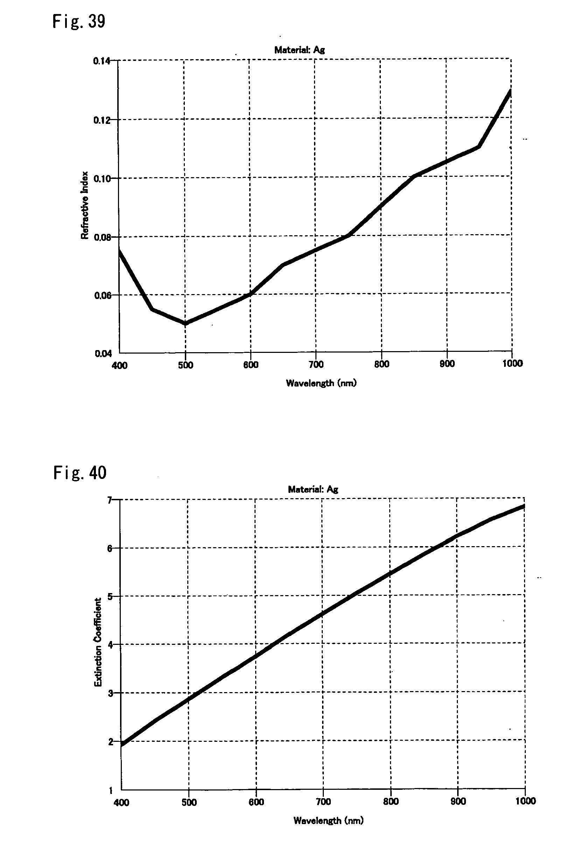

Incidentally, optical constants of the Ag layer as a single element are shown in Fig. 39 and Fig. 40. Fig. 39 shows a wavelength characteristic of a refractive index of the Ag layer as a single element and Fig. 40 shows a wavelength characteristic of an extinction coefficient of the Ag layer as a single element

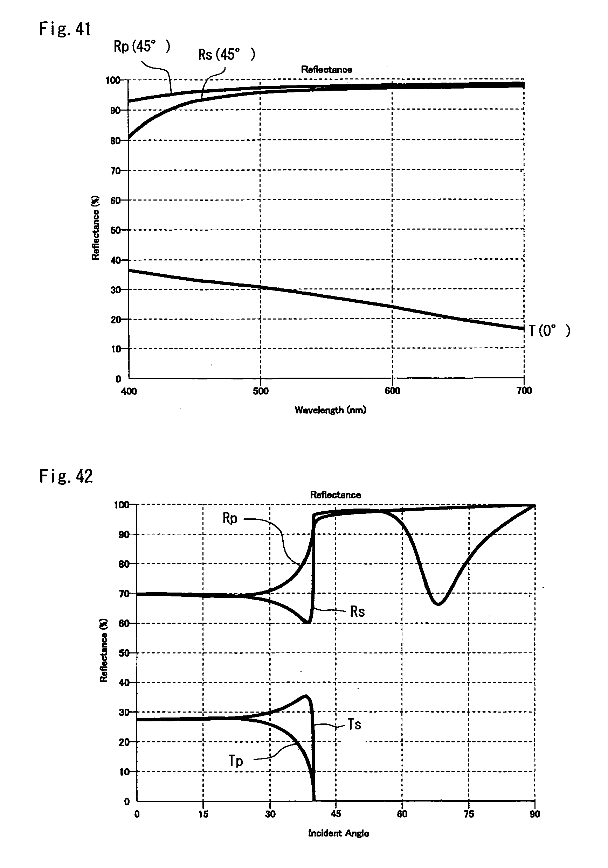

Wavelength characteristics of reflectance and transmittance of the plane substrate 11 side of the light-reducing film 20 (incident angles 0°, 45°) are shown in Fig. 41. Further, angle characteristics of reflectance and transmittance of the plane substrate 11 side of the light-reducing film 20 (wavelength 550 nm) are shown in Fig. 42.

In Fig. 41 and Fig. 42, "R" denotes reflectance and "T" denotes transmittance. The suffix "p" of the reflectance or transmittance denotes a characteristic for a p-polarized component and the suffix "s" of reflectance or transmittance denotes a characteristic for an s-polarized component (the same applies to other drawings).

As is apparent from Fig. 41 and Fig. 42, the light-reducing film 20 exhibits substantially 100% reflectance for visible light of the s-polarized component at an incident angle of 40° or more. Further, the light-reducing film 20 exhibits about 30% transmittance for visible light at an incident angle of 0°.

Therefore, the light-reducing film 20 reduces attenuation of light intensity of the optical path of the image-carrying light flux L1 and reduces only the external light flux L2 in a visible spectrum at a reduction ratio of about 70%.

At this time, brightness of an image (display image) viewed by the viewing eye is maintained and brightness of an external image is reduced to about 30%. Therefore, visibility of the display image when the external field is bright is surely enhanced. Thus selecting a suitable kind of film based on the reflectance-transmittance characteristics of the light-reducing film 20 dependent on the incident angle makes it possible to obtain a desired effect with the minimum structure.

Though the basic structure of the light-reducing film 20 of this embodiment is the two-layer structure of the Ag layer and the dielectric layer, other metal layer may be used instead of the Ag layer, or the three-layer structure in which two dielectric layers sandwich a metal layer may be also adopted. However, the two-layer structure of the Ag layer and the dielectric layer can more easily provide a good characteristic (characteristic of reducing only the external light flux L2 without increasing attenuation of the light intensity of the image-carrying light flux L1).

[First Modification Example of Eighth Embodiment]

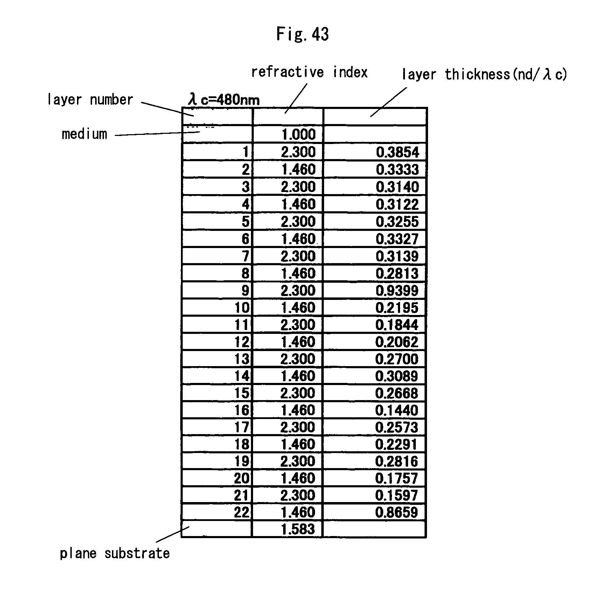

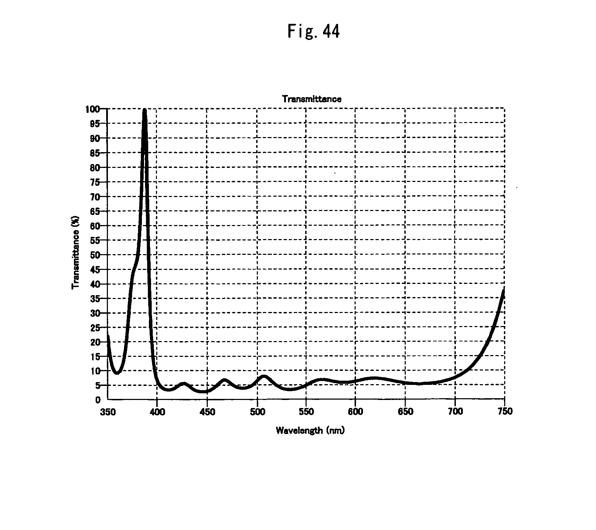

Hereinafter, a first modification example of the eighth embodiment will be described based on Fig. 43 and Fig. 44.

This modification example is a modification example of the light-reducing film 20.

The light-reducing film 20 of this modification example is made only of a dielectric. In this light-reducing film 20, a thickness of each layer is set so that phases of reflected light on interfaces of the respective layers have a desired relation, and depending on the relation of the phases of the reflected light, various characteristics can be set. Therefore, a degree of freedom of set transmittance is higher than that of the light-reducing film 20 of the eighth embodiment. There are three kinds of basic structures of this light-reducing film 20 as follows:

plane substrate/(0.25H0.25L)$^p$0.25H/air,

plane substrate/(0.125H0.25L0.125H)$^p$/air, and

plane substrate/(0.125L0.25H0.125L)$^p$/air, where

H: a high-refractive index dielectric (H layer),

L: a low-refractive index dielectric (L layer),

the numerical value on the left of each layer: optical layer thickness of each layer (in a center wavelength of a used wavelength range), and

p: the number of stacks of a parenthesized layer group.

According to these basic structures, it is possible to reduce transmittance for specific light as well as improve reflectance for specific light.

However, to ensure a reduction in brightness of an external image, it is necessary in designing the light-reducing film 20 to arrange a plurality of kinds of cycle layer groups different in center wavelength so as to widen a wavelength range of light for which transmittance can be reduced, up to the whole visible spectrum. Further, to reduce variation in transmittance depending on color, layer thickness has to be optimized for all the layers by a computer.

Details (specifications) of the light-reducing film 20 after the optimization are as follows

set transmittance: 5%,

center wavelength $\lambda c$: 480 nm,

refractive index of the plane substrate: 1.583,

refractive index of the H layers: 2.3,

refractive index of the L layers: 1.46, and

the total number of layers: 22

The structure of the light-reducing film 20 is shown in Fig. 43.

As the plane substrate, N-BAF3 manufactured by SCHOTT was used, and the same H layers and L layers as those of the sixth example were used.

A wavelength characteristic of transmittance of the light-reducing film 20 is shown in Fig. 44.

As is apparent from Fig. 44, the light-reducing film 20 exhibits about 5% transmittance for visible light. Therefore, according to this modification example, brightness of the external image is reduced to about 5%.

[Second Modification Example of Eighth Embodiment]

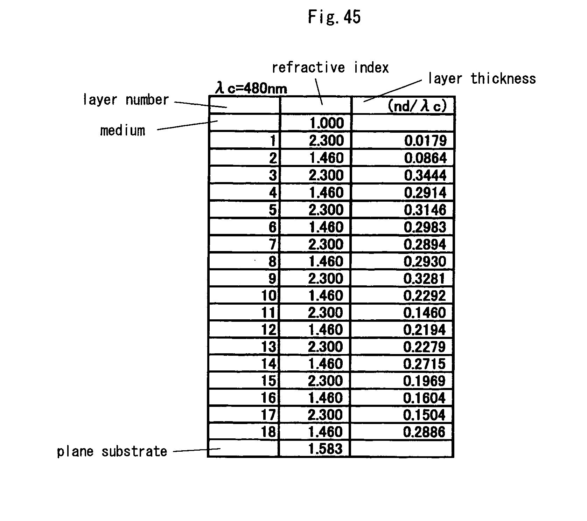

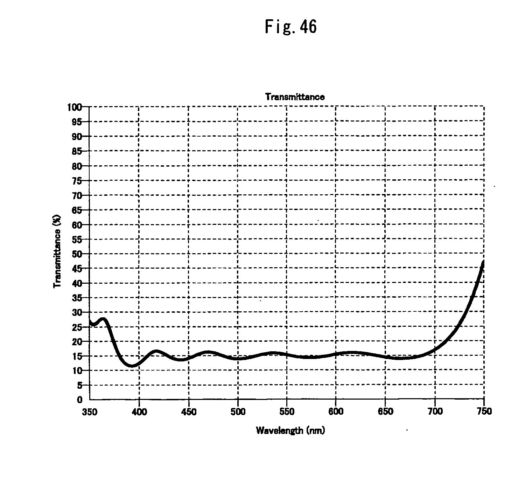

Hereinafter, a second modification example of the eighth embodiment will be described based on Fig. 45 and Fig. 46.

This modification example is a modification example of the light-reducing film 20.

Set transmittance of the light-reducing film 20 of this modification example is 15%. This light-reducing film 20 is also made only of a dielectric and its basic structure is the same as that of the first modification example.

Details (specifications) of the light-reducing film 20 are as follows;

set transmittance: 15%,

center wavelength $\lambda c$: 480 nm,

refractive index of the plane substrate: 1.583,

refractive index of the H layers: 2.3,

refractive index of the L layers: 1.46, and

the total number of layers: 18

The structure of the light-reducing film 20 is shown in Fig. 45. Further, the same materials as those of the first modification example of this embodiment are used.

A wavelength characteristic of transmittance of this light-reducing film 20 is shown in Fig. 46.

As is apparent from Fig. 46, the light-reducing film 20 exhibits about 15% transmittance for visible light. Therefore, according to this modification example, brightness of an external image is reduced to about 15%.

[Supplement to Modification Example]

In view of conditions of the internal reflection of the plane substrate 11, it will be discussed under which condition the light-reducing films 20 of the first modification example and the second modification example ensure brightness of a display image, that is, under which condition about 100% reflectance is achieved for the image-carrying light flux L1 that is inner-surface reflected in the plane substrate.

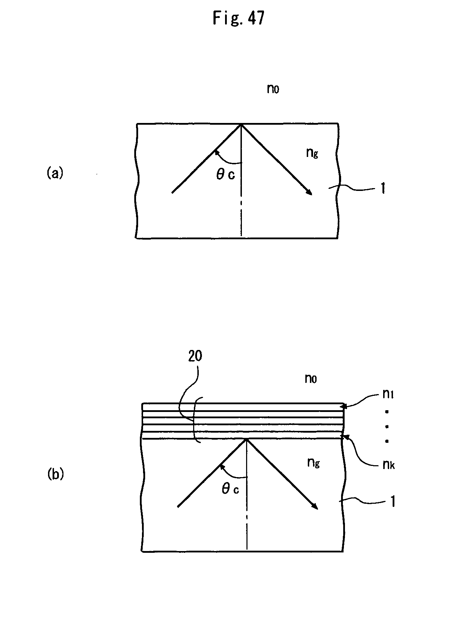

First, suppose a state with no light-reducing film 20 provided on the plane substrate 11 as shown in Fig. 47(a).

The following expression holds according to Snell's law, where $n_0$ is a refractive index of air being a medium in which the plane substrate 11 exists, $n_g$ is a refractive index of glass being a material of the plane substrate 11, and $\theta_0$, $\theta_g$ are incident angles of light on the plane substrate 11 and the medium.

$$n_0 \sin\theta_0 = n_g \sin\theta_g$$

Therefore, a critical angle $\theta_c$ (the minimum value of the incident angle allowing light to be inner-surface reflected) of the plane substrate 11 in this state is expressed by the following expression.

$$\theta_c = \arcsin(n_0/n_g)$$

Next, suppose a state in which the light-reducing film 20 made of a dielectric multilayer film is provided on the plane substrate 11 as shown in Fig. 47(b). If each layer of the multilayer film has no absorbency (zero absorbency), the following expression holds according to Snell's law, where $n_1$, $n_2$, ..., $n_k$ are refractive indexes of the respective layers of the multilayer film and $\theta_1$, $\theta_2$, ...$\theta_k$, are incident angles of light on the respective layers.

$$n_0 \sin\theta_0 = n_1 \sin\theta_1$$

$$= n_2 \sin\theta_2,$$

$$...,$$

$$= n_k \sin\theta_k$$

$$= n_g \sin\theta_g$$

Therefore, if each layer of the multilayer film has no absorbency, the critical angle $\theta c$ of the plane substrate 11 is expressed by the same expression as that for the state in which no light-reducing film 20 is provided.

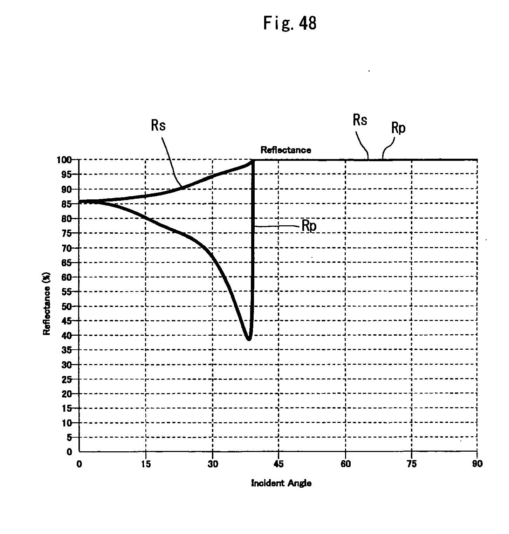

Therefore, a non-absorbent dielectric is used as the light-reducing films 20 of the first modification example and the second modification example. Incidentally, angle characteristics of reflectance of a plane substrate 11 side of the light-reducing films 20 (reflectance of the internal reflection of the plane substrate 11) of the first modification example and the second modification example using the non-absorbent dielectric are shown in Fig. 48.

As is apparent from Fig. 48, this light-reducing film 20 exhibits about 100% reflectance for light at an incident angle of 45% or more.

[Third Modification Example of Eighth Embodiment]

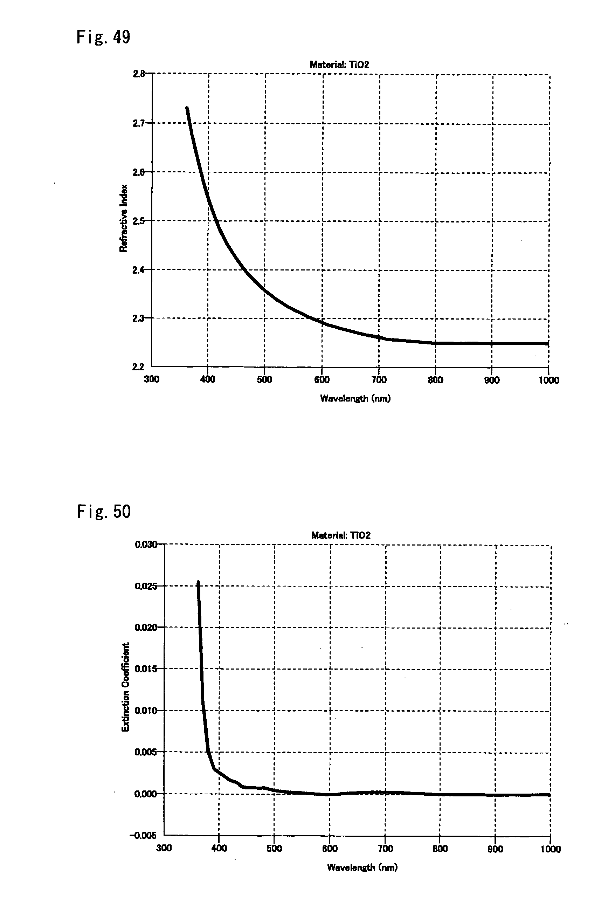

Hereinafter, a third modification example of the eighth embodiment will be described based on Fig. 49, Fig. 50, Fig. 51, Fig. 52, and Fig. 53.

This modification example is a modification example of the light-reducing film 20.

The light-reducing film 20 of this modification example has a function of ultraviolet and infrared protection.

This light-reducing film 20 is also made only of a dielectric, and its basic structure is the same as that of the first modification example and the second modification example.

In this modification example, in order to provide the ultraviolet and infrared protection function, an absorbent dielectric is positively used as the H layers. As the absorbent dielectric, titanium dioxide ($TiO_2$) is used.

Optical constants of titanium dioxide ($TiO_2$) are shown in Fig. 49 and Fig. 50. Fig. 49 shows a wavelength characteristic of a refractive index of titanium dioxide ($TiO_2$), and Fig. 50 shows a wavelength characteristic of an extinction coefficient of titanium dioxide ($TiO_2$).

Details (specifications) of this light-reducing film 20 are as follows:

set transmittance: 30%,
center wavelength $\lambda c$: 800 nm,
refractive index of the plane substrate: 1.583,
refractive index of the L layers: 1.46, and
the total number of layers: 48.

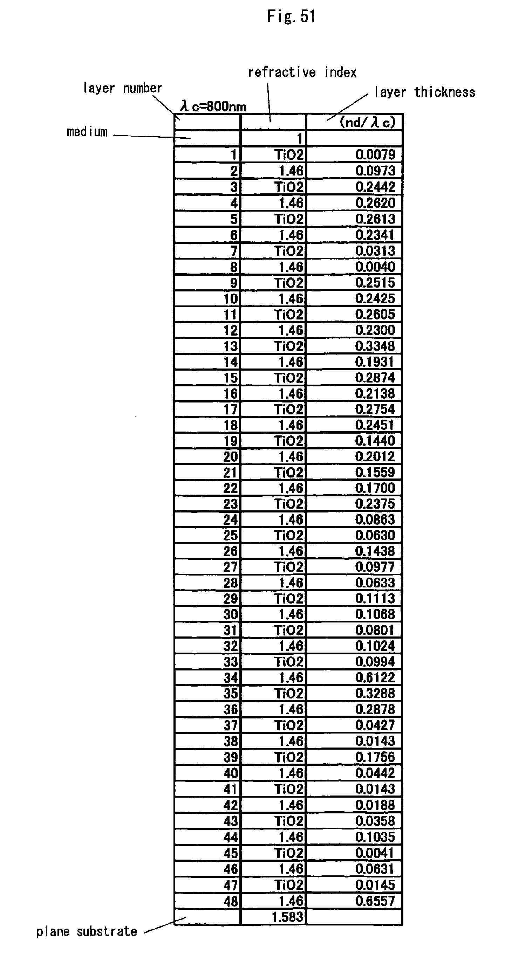

The structure of the light-reducing film 20 is shown in Fig. 51. The same materials as those of the first modification example of this embodiment were used for the plane substrate and the L layers.

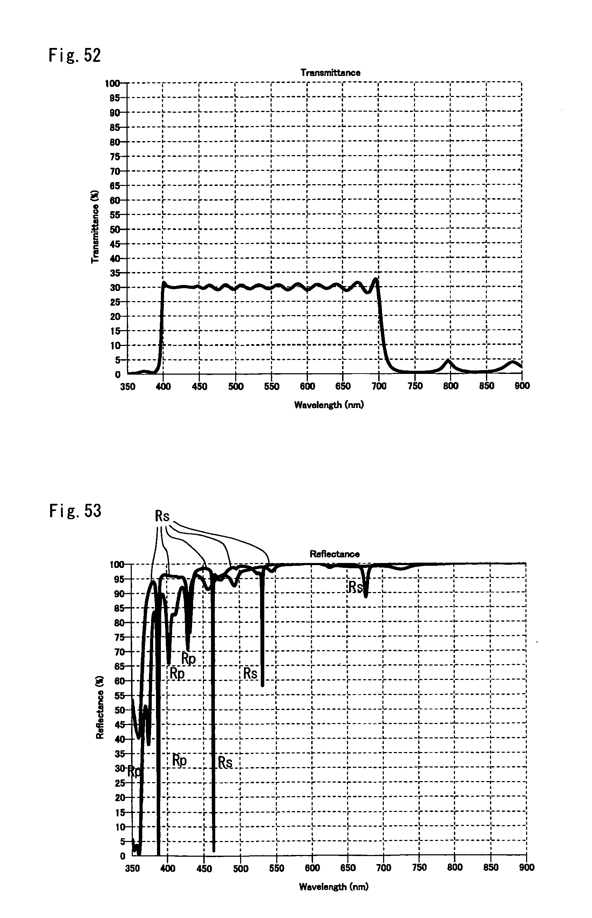

A wavelength characteristic of transmittance of the light-reducing film 20 is shown in Fig. 52. Wavelength characteristics of reflectance of a plane substrate 11 side of the light-reducing film 20 (reflectance of the internal reflection of the plane substrate 11) of this modification example are shown in Fig. 53.

As is apparent from Fig. 53, curves of the wavelength characteristics of reflectance have indentions (valleys of reflectance).

On the other hand, an emission wavelength characteristic curve of the liquid crystal display element 21 of the eyeglass display generally has peaks in the respective wavelengths of R color, G color, and B color. Therefore, the structure of the light-reducing film 20 of this modification example is finely adjusted so that the valleys of the curves of the wavelength characteristics of reflectance deviate from the peaks of the emission wavelength characteristic curve.

As a result, each wavelength component included in the image-carrying light flux L2 is surely inner-surface reflected in the plane substrate 11 with high reflectance. Therefore, brightness of a display image is ensured.

Incidentally, as is seen in Fig. 53, the curve for an s-polarized component and the curve for a p-polarized component are different in the way the valleys occur. In particular, the number of the valleys occurring in the curve for the p-polarized component is smaller.

Therefore, in a case where this light-reducing film 20 is applied to the eyeglass display, by limiting the image-carrying light flux L1 to the p-polarized components, it is possible to surely deviate the valleys of the curve of the wavelength characteristic of reflectance from the peaks of the emission wavelength characteristic curve.

Incidentally, because of the principle of the liquid crystal display element 21, the image-carrying light flux L1 is polarized, and therefore, by optimizing the positional relation of the liquid crystal display element 21 and the plane substrate 11 so that its polarization direction becomes a p-polarized direction relative to the light-reducing film 20, or by inserting a phase plate on a subsequent stage of the liquid crystal display element 21, it is possible to limit the image-carrying light flux L1 only to the p-polarized components.

[Ninth Embodiment]

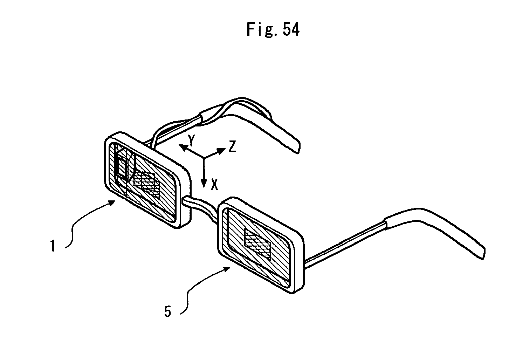

Hereinafter, a ninth embodiment of the present invention will be described based on Fig. 54, Fig. 55, Fig. 56, and Fig. 57

This embodiment is an embodiment of an eyeglass display. Here, only what are different from the eighth embodiment will be described.

Fig. 54 is an external view of this eyeglass display. The coordinate system in Fig. 54 is a right-handed XYZ Cartesian coordinate system in which the X direction points downward and the Y direction points rightward if viewed from a viewer. In the description below, the direction expressed by the XYZ coordinate system or the direction expressed by left, right, up, and down viewed from the viewer will be used as required.

As shown in Fig. 54, this eyeglass display is different from that of the eighth embodiment in that a light reduction ratio of a center area near a half mirror 11 b in an image-display optical system 1 is set higher than a light reduction ratio of a peripheral area outside the center area in the image-display optical system 1.

Further, in order to balance light intensity of an external light flux directed from an external field toward a viewing eye (right eye of a viewer) and light intensity of an external light flux directed from the external field toward a non-viewing eye (left eye of the viewer), and in addition, in order to balance right and left external appearances of the eyeglass display, a non-viewing eye side front has a light-reducing function similar to that of the image-display optical system 1, and a plane substrate 5 having the same external appearance as that of the image-display optical system 1 is attached to the non-viewing eye side front. This does not apply to a case where there is no need to balance the external light fluxes and balance the external appearances.

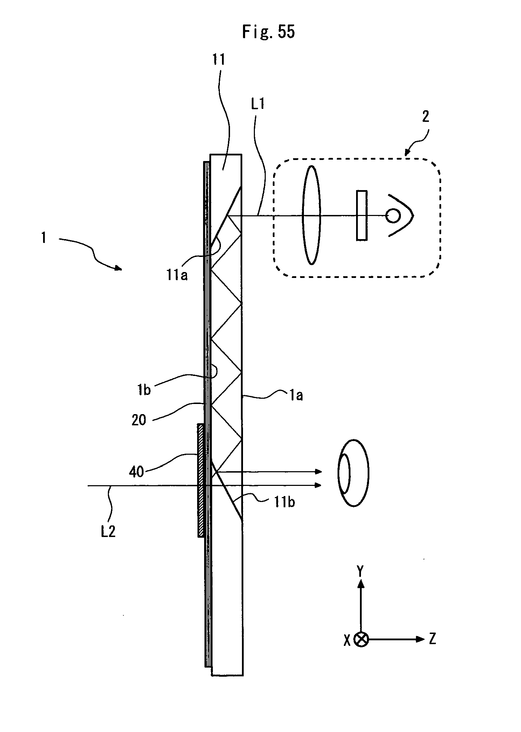

Fig. 55 is a detailed view of an optical system of the eyeglass display and is a schematic cross-sectional view of an optical system part of the eyeglass display taken along a plane parallel to a YZ plane.

As shown in Fig. 55, behaviors of an image-carrying light flux L1 and an external light flux L2 in this eyeglass display are the same as those of the eighth embodiment (see Fig. 38).

On an external side surface 1b of a plane substrate 11 constituting the image-display optical system 1, the same light-reducing film 20 as that of the eighth embodiment or its modification examples is provided.

However, in a center area of a surface of the light-reducing film 20, a light-reducing film 40 made of a multilayer film of metal or a dielectric is overlaid.

Consequently, a light reduction ratio of the center area of the image-display optical system 1 becomes higher than a light reduction ratio of the peripheral area of the image-display optical system 1.

Incidentally, the position of the center area viewed from a viewer and the position of the half mirror 11 b viewed from the viewer are substantially the same. Further, the size of the center area viewed from the viewer is slightly larger than the size of the half mirror 11 b viewed from the viewer.

In this eyeglass display as described above, brightness of an external image of a background portion of a display image is especially greatly reduced, so that visibility of the display image is further enhanced.

Next, a concrete example of the light-reducing films 20, 40 will be described.

The light-reducing film 20 is made of the same dielectric multilayer film as those of the modification examples of the eighth embodiment. The light-reducing film 40 is also made of the same dielectric multilayer film as those of the modification examples of the eighth embodiment. The same plane substrate as those of the modification examples of the eighth embodiment is also used.

Details (specifications) of the light-reducing films 20, 40 are as follows:

set transmittance of the light-reducing film 20: 50%,
set transmittance of the light-reducing film 40: 50%,
center wavelength $\lambda c$: 800 nm,

refractive index of the plane substrate: 1.583,
refractive index of the H layers: 2.3,
refractive index of the L layers: 1.46,
the total number of layers of the light-reducing film 20: 11, and
the total number of layers of the light-reducing film 40: 16.

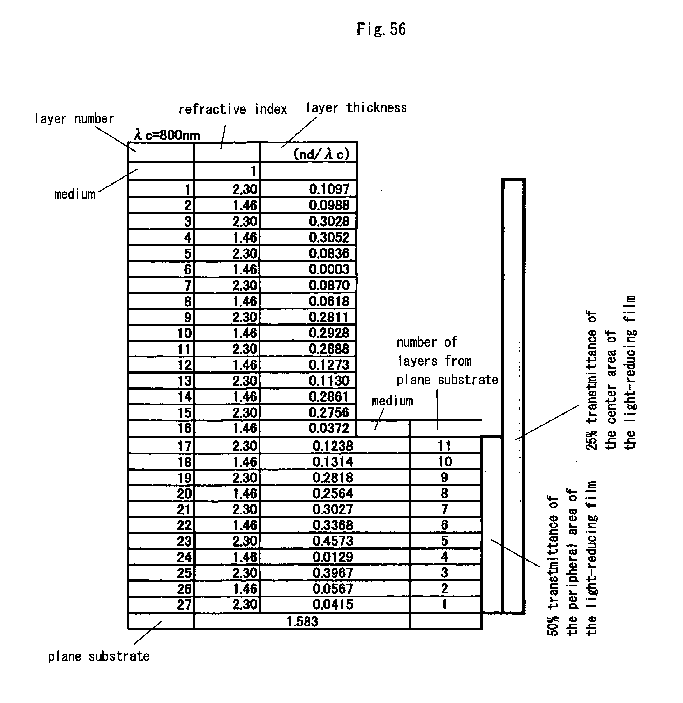

The structure of the light-reducing films 20, 40 is shown in Fig. 56.

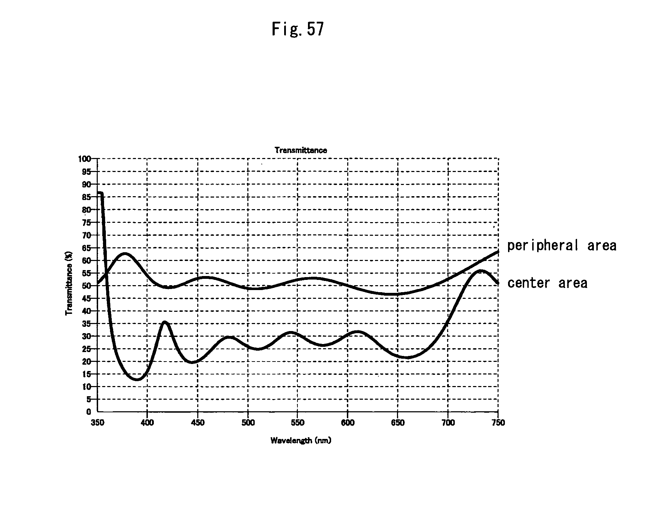

A wavelength characteristic of transmittance of the center area of the light-reducing films 20, 40 and a wavelength characteristic of transmittance of the peripheral area of the light-reducing film 20 are shown in Fig. 57.

As is apparent from Fig. 57, transmittance of the center area for visible light is about 25% and transmittance of the peripheral area for visible light is about 50%.

Therefore, according to this eyeglass display, brightness of a whole external image is reduced to about 50% and brightness of the external image in a background portion of the display image is reduced to about 25%.

In this embodiment, the light-reducing film 20 and the light-reducing film 40 are overlaid on each other, but they need not be overlaid on each other. In this case, the light-reducing film 20 having an opening in the center area is provided on the plane substrate 11, and the light-reducing film 40 higher in light reduction ratio than the light-reducing film 20 is provided in the opening. However, in this case, masking is required both during the formation of the light-reducing film 20 and during the formation of the light-reducing film 40, and therefore, overlaying the light-reducing film 20 and the light-reducing film 40 on each other is more desirable in terms of reduction in manufacturing cost.

[First Modification Example of Ninth Embodiment]

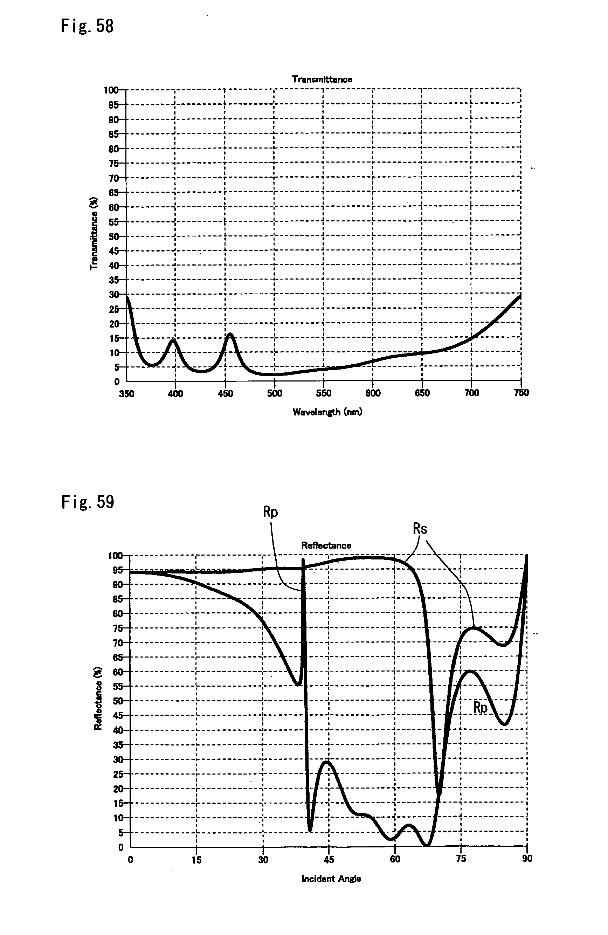

Hereinafter, a first modification example of the ninth embodiment will be described based on Fig. 58 and Fig. 59.

This modification example is a modification example of the light-reducing film 20 and the light-reducing film 40. The light-reducing film 40 of this modification example is made of a metal film.

The structure of the light-reducing film 20 of this modification example is the same as that shown in Fig. 45. The light-reducing film 20 as a single element has the same characteristic as that shown in Fig. 46.

As for the structure of the light-reducing film 40, it consists of one chrome (Cr) layer with a 5 mm thickness. At this time, the center area of the light-reducing films 20, 40 has a wavelength characteristic of transmittance shown in Fig. 58.

Further, angle characteristics (characteristics in the center area) of reflectance on the plane substrate 11 side of the light-reducing film 20 (reflectance of internal reflection of the plane substrate 11) are shown in Fig. 59.

As is apparent from Fig. 59, reflectance for an s-polarized component of the above-described light at an incident angle of 40° or more has a high numerical value. However, reflectance for a p-polarized component of this light is low. Therefore, in a case where the light-reducing films 20, 40 of this modification example are applied to an eyeglass display, the image-carrying light flux L1 is desirably limited to the s-polarized components.

Incidentally, the image-carrying light flux L1 is polarized because of the principle of a liquid crystal display element 21, and therefore, by optimizing the positional relation of the liquid crystal display element 21 and the plane substrate 11 so that its polarization direction becomes the s-polarization direction, or by inserting a phase plate on a subsequent stage of the liquid crystal display element 21, it is possible to limit the image-carrying light flux L1 only to the s-polarized components.

[Second Modification Example of Ninth Embodiment]

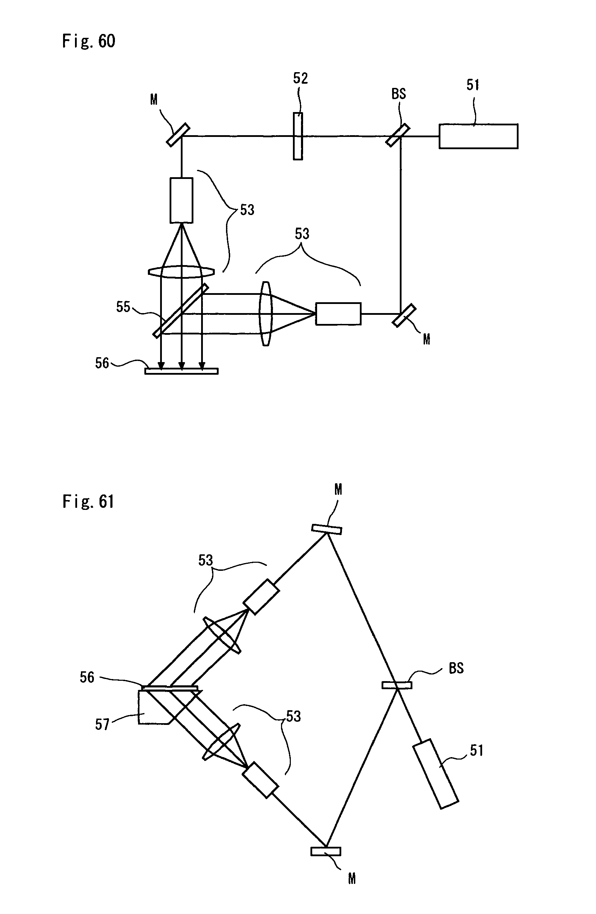

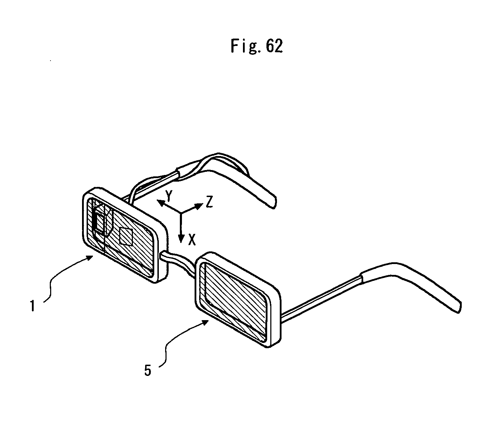

Hereinafter, a second modification example of the ninth embodiment will be described based on Fig. 60 and Fig. 61.

This modification example is a modification example of the light-reducing film 20. The light-reducing film 20 of this modification example is made of a holographic optical film.

Exposure takes place twice during manufacture of this holographic optical film.

The first exposure is exposure for providing the holographic optical film with a characteristic of transmitting light at an incident angle of approximately 0°, with predetermined transmittance. This exposure takes place in an optical system as shown in, for example, Fig. 60.

Specifically, two light fluxes are vertically incident on a hologram photosensitive material 56. An optical attenuator is inserted in one of the light fluxes. A value of transmittance is settable by an attenuation amount of the optical attenuator 52. In Fig. 60, 51 denotes a laser light source (capable of radiating laser beams with wavelengths of R color, G color, and B color), BS denotes a beam splitter, M denotes mirrors, 53 denotes beam expanders, and 55 denotes a beam splitter.

The second exposure is exposure for ensuring reflectance for the image-carrying light flux L1 that is inner-surface reflected in the plane substrate 11. This exposure takes place in an optical system as shown in, for example, Fig. 61.

Specifically, two light fluxes are incident on the hologram photosensitive material 56 at the same angle as that of the image-carrying light flux L1 inner-surface reflected in the plane substrate 11. In Fig. 61, 51 denotes a laser light source (capable of radiating laser beams with wavelengths of R color, G color, and B color), BS denotes a beam splitter, M denotes mirrors, 53 denotes beam expanders, and 57 denotes an auxiliary prism.

After the two exposures, the hologram photosensitive material 56 is developed, so that a holographic optical film is completed.

The holographic optical film thus completed is provided with a function that the light-reducing film 20 needs to have.

Though this modification example is a modification example in which the light-reducing film 20 is made of the holographic optical film, the light-reducing film 20 and the light-reducing film 40 can be constituted of one holographic optical film.

In manufacture of such a holographic optical film, the first exposure takes place in two divided steps. In one of the exposure steps, a center area of the holographic optical film is exposed (a peripheral area is masked), and in the other exposure step, the peripheral area is exposed (the center area is masked).

In these two steps of the exposure, attenuation amounts of the optical attenuator 52 are set to different values. Consequently, transmittance of the center area and transmittance of the peripheral area of the holographic optical film are set to different values.

[Tenth Embodiment]

Hereinafter, a tenth embodiment of the present invention will be described based on Fig. 62, Fig. 63, Fig. 64, Fig. 65, and Fig. 66.

This embodiment is an embodiment of an eyeglass display. Here, only what are different from the eighth embodiment will be described.

Fig. 62 is an external view of this eyeglass display. The coordinate system in Fig. 62 is a right-handed XYZ Cartesian coordinate system in which the X direction points downward and the Y direction points rightward if viewed from a viewer. In the description below, the direction expressed by the XYZ coordinate system or the direction expressed by left, right, up, and down viewed from the viewer will be used as required.

As shown in Fig. 62, the external appearance of this eyeglass display is substantially the same as that of the eighth embodiment (see Fig. 37).

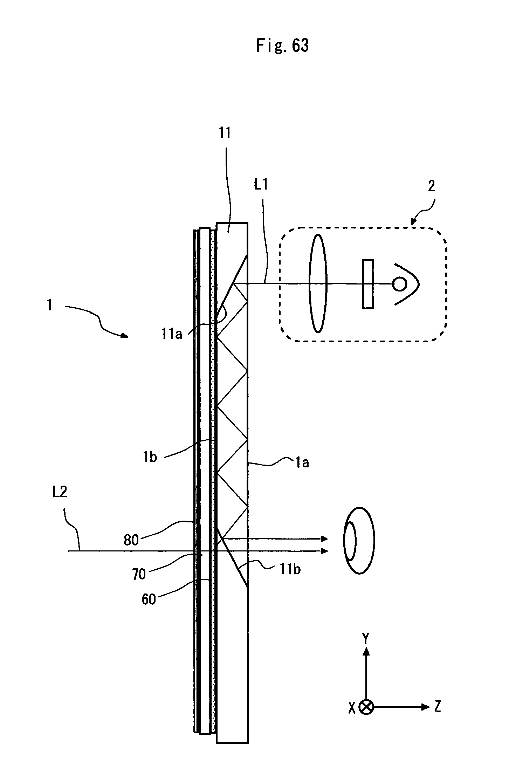

Fig. 63 is a detailed view of an optical system of this eyeglass display, and is a schematic cross-sectional view of an optical system part of this eyeglass display taken along a plane parallel to a YZ plane.

As shown in Fig. 63, behaviors of an image-carrying light flux L1 and an external light flux L2 in this eyeglass display are the same as those of the eighth embodiment (see Fig. 38).

A first optical film 60 is provided on an external-side surface 1 b of a plane substrate 11. A second plane substrate 70 made of optical glass is pasted on a surface of the first optical film 60. A second optical film 80 is also pasted on a surface of the second plane substrate 70.

The first optical film 60 acts to the plane substrate 11 in the same manner as an air gap acts. Specifically, a plane substrate 11 side interface of the first optical film 60 reflects the image-carrying light flux L1 with substantially 100% reflectance. Further, the first optical film 60 transmits the external light flux L2. Incidentally, the first optical film 60 may be provided with a function of reducing visible light and a function of ultraviolet or infrared protection.
The second plane substrate 70 and the second optical film 80 have a function of reducing the external light flux L2. Incidentally, the second plane substrate 70 and the second optical film 80 may be provided with a function of reducing visible light and a function of ultraviolet or infrared protection.

In this eyeglass display, the function of the first optical film 60 ensures reflectance for the image-carrying light flux L1 inner-surface reflected in the plane substrate 11, and therefore, it is not necessary for the second plane substrate 70 and the second optical film 80 to have a function of enhancing the reflectance for the image-carrying light flux L1.
Therefore, a degree of freedom in designing the second plane substrate 70 and the second optical film 80 is high. For example, any of various kinds of existing optical filter glass is applicable to the second plane substrate 70.

Therefore, the second plane substrate 70 and the second optical film 80 can be provided with a higher light-reducing function.
The high light-reducing function means, for example, small variation in light reduction ratio depending on an incident angle, small variation in light reduction ratio depending on a wavelength, and the like.
Next, a concrete example of the first optical film 60 will be described. Here, a case where the image-carrying light flux L1 is limited only to s-polarized components will be described.

The structure of the first optical film 60 is as follows:

> plane substrate/(0.125L0.28H0.15L)(0.125L0.25H0.125L)$^4$ (0.15L0.28H0.125L)/second plane substrate, where
> H: a high-refractive index dielectric (H layer),
> L: a low-refractive index dielectric (L layer),
> the numerical value on the left of each layer: optical layer thickness of each layer (in a center wavelength of a used wavelength range), and
> the superior numeral: the number of stacks of a parenthesized layer group.

Details (specifications) of the first optical film 60 are as follows:
center wavelength λc: 850 nm,
refractive index of the plane substrate: 1.56,
refractive index of the H layers: 2.30,
refractive index of the L layers: 1.48,
refractive index of the second plane substrate: 1.507, and extinction coefficient k of the second plane substrate = 0.01.
Incidentally, the extinction coefficient k of the second plane substrate 70 was set to a large value such as 0.01, with the intention of providing the second plane substrate 70 with a variety of light-reducing characteristics and a wavelength cutting function by using various kinds of optical filter glass as the second plane substrate 70.

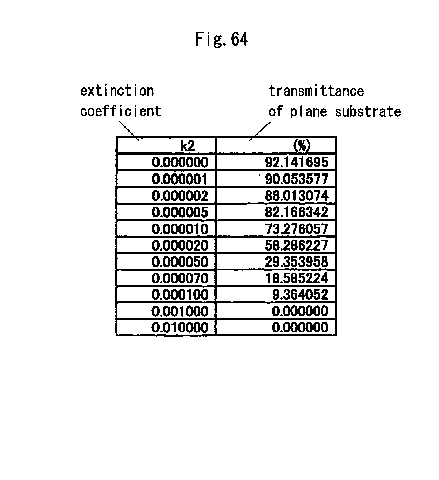

Fig. 64 shows the result of calculating the correlation between the extinction coefficient k and transmittance of a glass substrate with a 1.50 refractive index and a 1 mm thickness.
From Fig. 64, it is seen that a practical maximum value of the extinction coefficient k is 0.01.
Therefore, setting the extinction coefficient k of the second plane substrate 70 to 0.01 makes it possible to design the first optical film 60 that is effective, whichever optical filter glass is used as the second plane substrate 70.

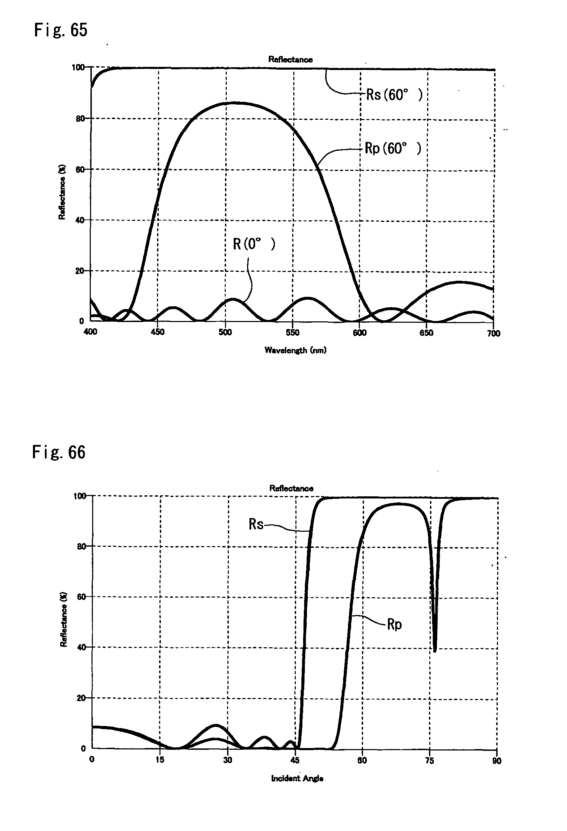

Wavelength characteristics (incident angles 0°, 60°) of reflectance of a plane substrate 11 side of the first optical film 60 are shown in Fig. 65.
Further, angle characteristics of reflectance of a second plane substrate 70 side of the first optical film 60 are shown in Fig. 66.
As is apparent from Fig. 65 and Fig. 66, the first optical film 60 exhibits reflectance of 10% or lower on average for an s-polarized component of visible light at a 0° incident angle, and exhibits substantially 100% reflectance for an s-polarized component of visible light at a 60° incident angle.

Further, as previously described, any optical filter glass is usable as the second plane substrate 70. That is, any of optical filter glasses on the market such as an ultraviolet protector, an infrared protector, a color filter, and a neutral density filter (filter uniformly reducing lights with all the wavelengths in the visible spectrum) is applicable to the second plane substrate 70.
Further, as the second optical film 80, usable is any film suitable for protecting a surface of the second plane substrate 70, for example, an antireflection film or the like. Preferably, a film achieving desired performance when combined with the second plane substrate 70 is applied to the second optical film 80.

For example, a neutral density filter may be used as the second plane substrate 70 and an infrared protection film may be used as the second optical film 80. Further, an ultraviolet protection glass may be used as the second plane substrate 70 and a light-reducing film and an ultraviolet protection film may be used as the second optical film 80.
In short, the combination of the second plane substrate 70 and the second optical film 80 is appropriately selectable according to performance that the eyeglass display needs to have, manufacturing cost of the eyeglass display, and the like.

Incidentally, the kinds and functions of various kinds of multilayer films such as various kinds of filters are described in detail in documents such as, for example, "Thin-Film optical Filters 3$^{rd}$. Edition" written by H.A. Macleod, and therefore, description thereof will be omitted here.
The reason why the one-cycle layer groups are disposed on both sides of the plural-cycle layer groups in the above-described structure of the first optical film 60 is to adjust mismatch in refractive index between the first optical film 60 and the plane substrate 11 and to adjust mismatch in refractive index between the first optical film 60 and the second plane substrate 70 (that is, each of the one-cycle layer groups is a matching layer). The matching layer serves to finely adjust the characteristic of the first optical film 60 such as reducing ripples in a wavelength band for which transmittance should be reduced.

[Modification Example of Tenth Embodiment]

The first optical film 60 may have a different structure from the above-described structure. Whichever structure is applied, appropriate cycle layer groups are included.
Further, whichever structure is applied, it is desirably optimized by a computer.
Further, as the combination of the second optical film 80 and the second plane substrate 70, the combination of a metal film of chrome (Cr) or the like and an optical glass substrate small in extinction coefficient k is also applicable.
Further, as the second optical film 80, also applicable are various kinds of functional thin films, for example, an electrochromic film (EC film), a photochromic film (PC film), and the like.
The use of the electrochromic film (EC film) enables a user to select necessity or not of light reduction according to a usage state of the eyeglass display by a user's turning-on operation. For example, a user can make the following selection, for instance: to reduce light when an external image is extremely bright in such a case where the eyeglass display is used outdoors in the daytime; and not to reduce light when the external image is not very bright in such a case when the eyeglass display is used indoors.
By this operation, both visibility of the external image and visibility of a display image can be maintained irrespective of the usage state of the eyeglass display.
Further, if the photochromic film (PC film) is used, the external light flux L2 is automatically reduced only when light intensity of the external light flux L2 is high, so that visibility of an external image and visibility of a display image are both automatically maintained irrespective of the usage state of the eyeglass display.
Applying the above-described functional thin films dramatically improves performance of the eyeglass display.
Moreover, in this eyeglass display, as in the ninth embodiment, a light reduction ratio of a center area of the image-display optical system 1 can be easily set higher than a light reduction ratio of a peripheral area of the image-display optical system 1.
For example, the second plane substrate 70 is made of a neutral density filter, the second optical film 80 is made of a light-reducing film, and a formation area of the second optical film 80 is limited only to the center area.
In this eyeglass display, the first optical film 60 can be made of a holographic optical film. An optical system shown in Fig. 61 is usable in manufacture of this holographic optical film. However, since the first optical film 60 is sandwiched by the plane substrate 11 and the second plane substrate 70 when in use, auxiliary prisms in the same shape as that of these plane substrates are disposed in the optical paths of the two light fluxes in Fig. 61.
Further, in this eyeglass display, the second optical film 80 can be made of a holographic optical film.

[Other Embodiments]

The light-reducing function of any of the eighth embodiment ~ the tenth embodiment (including the modification examples) described above may be provided in the eyeglass display of any of the first embodiment ~ the seventh embodiment.

*INDUSTRIAL APPLICABILITY*

In the above-described embodiments, only the eyeglass display is described, but the present invention is similarly applicable to a finder and the like of a camera, binoculars, a microscope, a telescope, and the like.

**Claims**

1. An optical element comprising:

   a plane substrate through an inside of which a predetermined light flux is capable of propagating; and
   an optical function unit that is situated in close contact with a surface of said plane substrate reachable by said propagating predetermined light flux and that has interfering or diffracting actions of reflecting the predetermined light flux and transmitting an external light flux reaching the surface.

2. The optical element according to claim 1, wherein said optical function unit has a property of reflecting said predetermined light flux polarized in a specific direction and transmitting a light flux polarized in another direction.

3. The optical element according to claim 1 or 2, wherein
   said optical function unit has a property of reflecting, with a desired reflection characteristic, said predetermined light flux reaching said surface at an incident angle equal to or larger than a critical angle, the critical angle being determined by refractive indexes of said plane substrate and air and being a condition under which a light flux inside of the plane substrate is totally reflected.

4. The optical element according to one of claims 1 to 3, wherein
said optical function unit has a function of reducing said external light flux without increasing attenuation of light intensity of a light path of said predetermined light flux.

5. A combiner optical system comprising:

the optical element according to one of claims 1 to 3 in which an image-carrying light flux radiated from a predetermined image-display element propagates and which transmits said external light flux directed from an external field to a viewing eye at least in a state in which said plane substrate faces the viewing eye; and
a combiner that is provided in said optical element and reflects said image-carrying light flux, which has propagated in said plane substrate, in a direction of said viewing eye and transmits said external light flux.

6. The combiner optical system according to claim 5, wherein:

said optical function unit is an optical film provided on the surface of said plane substrate; and
a second plane substrate is provided on a surface of said optical film.

7. The combiner optical system according to claim 6, wherein said second plane substrate is a refractor for diopter correction.

8. The combiner optical system according to claim 6, wherein:

said optical function unit is provided on an external-side surface of said plane substrate; and
a whole optical system including said optical function unit and said second plane substrate has a function of reducing said external light flux without increasing attenuation of light intensity of an optical path of said image-carrying light flux.

9. The combiner optical system according to claim 8, wherein said second plane substrate has a property of absorbing visible light.

10. The combiner optical system according to claim 8, wherein
said optical film has a function of reducing said external light flux without increasing attenuation of light intensity of an optical path of said image-carrying light flux.

11. The combiner optical system according to claim 8, wherein said optical film is made of metal and/or a dielectric.

12. The combiner optical system according to claim 8, wherein said optical film is made of a holographic optical film.

13. The combiner optical system according to claim 8, wherein
a second optical film is provided on a surface of said second plane substrate.

14. The combiner optical system according to claim 13, wherein
said second optical film is made of metal and/or a dielectric.

15. The combiner optical system according to claim 13, wherein
said second optical film is made of a holographic optical film.

16. The combiner optical system according to claim 13, wherein said second optical film is made of an electrochromic film.

17. The combiner optical system according to claim 13, wherein said second optical film is made of a photochromic film.

18. The combiner optical system according to any one of claim 8 to claim 17, wherein
a whole optical system including said optical function unit and said second plane substrate reduces said external light flux incident on said combiner, at a higher reduction ratio than a reduction ratio at which a rest of said external light flux is reduced.

19. The combiner optical system according to any one of claim 5 to claim 18, further comprising
a guide mirror for guiding said image-carrying light flux radiated from said image-display element, in a direction allowing said image-carrying light flux to be inner-surface reflected in said plane substrate.

20. An image display unit comprising:

an image-display element for radiating an image-carrying light flux for image display; and
the combiner optical system according to any one of claim 5 to claim 19 for guiding the image-carrying light flux to said viewing eye.

21. The image display unit according to claim 20, further comprising

a mounting member with which said combiner optical system is worn on a head of a viewer.

Fig. 1

Fig. 2

Fig. 3

Fig. 4

Fig. 5

Fig. 6

Fig. 7

Fig. 8

Fig. 9

Fig. 10

EP 1 748 305 A1

**Fig. 11**

**Fig. 12**

**Fig. 13**

32

## Fig.14

refractive index

layer thickness

layer number

plane substrate

| layer number | λ=510nm (refractive index) | layer thickness (nd/λ) |
|---|---|---|
| | 1.5600 | |
| 1 | 2.2000 | 0.06988 |
| 2 | 1.4600 | 0.07211 |
| 3 | 2.2000 | 0.38315 |
| 4 | 1.4600 | 0.04919 |
| 5 | 2.2000 | 0.14002 |
| 6 | 1.4600 | 0.07159 |
| 7 | 2.2000 | 0.01924 |
| 8 | 1.4600 | 0.03917 |
| 9 | 2.2000 | 0.50430 |
| 10 | 1.4600 | 0.43804 |
| 11 | 2.2000 | 0.41685 |
| 12 | 1.4600 | 0.42760 |
| 13 | 2.2000 | 0.15623 |
| 14 | 1.4600 | 0.02719 |
| 15 | 2.2000 | 0.18385 |
| 16 | 1.4600 | 0.43801 |
| 17 | 2.2000 | 0.41294 |
| 18 | 1.4600 | 0.44948 |
| 19 | 2.2000 | 0.47158 |
| | 1.5600 | |

plane substrate

Fig. 15

Fig. 16

Fig. 17

## Fig. 18

| layer number | λ=510nm refractive index | layer thickness (nd/λ) |
|:---:|:---:|:---:|
| plane substrate | 1.5600 | |
| 1 | 1.3845 | 0.11056 |
| 2 | 2.2000 | 0.02142 |
| 3 | 1.3845 | 1.02261 |
| 4 | 2.2000 | 0.03911 |
| 5 | 1.3845 | 0.09816 |
| 6 | 2.2000 | 0.50382 |
| 7 | 1.3845 | 0.49821 |
| 8 | 2.2000 | 0.38782 |
| 9 | 1.3845 | 0.02651 |
| 10 | 2.2000 | 0.09255 |
| 11 | 1.3845 | 0.98790 |
| 12 | 2.2000 | 0.03817 |
| 13 | 1.3845 | 0.05037 |
| 14 | 2.2000 | 0.47999 |
| 15 | 1.3845 | 0.52832 |
| 16 | 2.2000 | 0.12849 |
| 17 | 1.3845 | 0.00187 |
| 18 | 2.2000 | 0.39585 |
| 19 | 1.3845 | 0.52150 |
| 20 | 2.2000 | 0.25969 |
| 21 | 1.3845 | 0.02287 |
| 22 | 2.2000 | 0.16016 |
| 23 | 1.3845 | 0.44843 |
| 24 | 2.2000 | 0.13844 |
| 25 | 1.3845 | 0.05007 |
| 26 | 2.2000 | 0.17367 |
| 27 | 1.3845 | 0.45809 |
| 28 | 2.2000 | 0.43680 |
| 29 | 1.3845 | 0.45307 |
| 30 | 2.2000 | 0.20979 |
| 31 | 1.3845 | 0.02861 |
| 32 | 2.2000 | 0.17739 |
| 33 | 1.3845 | 0.54739 |
| 34 | 2.2000 | 0.09848 |
| 35 | 1.3845 | 0.14497 |
| 36 | 2.2000 | 0.06622 |
| 37 | 1.3845 | 0.95961 |
| 38 | 2.2000 | 0.01043 |
| 39 | 1.3845 | 0.11515 |
| 40 | 2.2000 | 0.00480 |
| plane substrate | 1.5600 | |

plane substrate

Fig. 19

Fig. 20

Fig. 21

Fig. 22

Fig. 23

## Fig. 24

layer thickness (nm)  refractive index

layer number

plane substrate

| layer number | layer thickness (nm) | refractive index |
|---|---|---|
| | | 1.60 |
| 1 | 80.429 | L1.46 |
| 2 | 114.131 | H2.3 |
| 3 | 181.15 | L1.46 |
| 4 | 141.464 | H2.3 |
| 5 | 23.891 | L1.46 |
| 6 | 64.191 | H2.3 |
| 7 | 28.161 | L1.46 |
| 8 | 36.869 | H2.3 |
| 9 | 46.054 | L1.46 |
| 10 | 126.836 | H2.3 |
| 11 | 187.922 | L1.46 |
| 12 | 17.198 | H2.3 |
| 13 | 197.842 | L1.46 |
| 14 | 123.535 | H2.3 |
| 15 | 200.63 | L1.46 |
| 16 | 39.021 | H2.3 |
| 17 | 8.516 | L1.46 |
| 18 | 80.586 | H2.3 |
| 19 | 191.561 | L1.46 |
| 20 | 40.612 | H2.3 |
| 21 | 28.472 | L1.46 |
| 22 | 21.342 | H2.3 |
| 23 | 181.77 | L1.46 |
| 24 | 18.218 | H2.3 |
| 25 | 59.287 | L1.46 |
| 26 | 4.411 | H2.3 |
| 27 | 135.31 | L1.46 |
| 28 | 114.546 | H2.3 |
| 29 | 204.55 | L1.46 |
| 30 | 11.767 | H2.3 |
| 31 | 220.205 | L1.46 |
| 32 | 9.673 | H2.3 |
| 33 | 227.817 | L1.46 |
| 34 | 7.978 | H2.3 |
| 35 | 233.716 | L1.46 |
| 36 | 10.171 | H2.3 |
| 37 | 211.712 | L1.46 |
| 38 | 113.391 | H2.3 |
| 39 | 219.568 | L1.46 |
| 40 | 11.166 | H2.3 |
| 41 | 407.567 | L1.46 |
| 42 | 33.408 | H2.3 |
| 43 | 25.905 | L1.46 |
| 44 | 43.611 | H2.3 |
| 45 | 62.984 | L1.46 |
| 46 | 1.101 | H2.3 |
| 47 | 143.64 | L1.46 |
| 48 | 20.468 | H2.3 |
| 49 | 49.393 | L1.46 |
| 50 | 13.416 | H2.3 |
| 51 | 179.482 | L1.46 |
| | | 1.00 |

**Fig. 25**

**Fig. 26**

**Fig. 27**

Fig. 28

## Fig. 29

| layer number | layer thickness (nm) | refractive index |
|---|---|---|
| plane substrate | | 1.56 |
| 1 | 130.588 | L1.46 |
| 2 | 18.382 | H2.3 |
| 3 | 19.027 | L1.46 |
| 4 | 73.624 | H2.3 |
| 5 | 188.115 | L1.46 |
| 6 | 37.964 | H2.3 |
| 7 | 203.086 | L1.46 |
| 8 | 38.878 | H2.3 |
| 9 | 197.223 | L1.46 |
| 10 | 35.054 | H2.3 |
| 11 | 199.399 | L1.46 |
| 12 | 31.258 | H2.3 |
| 13 | 182.564 | L1.46 |
| 14 | 93.986 | H2.3 |
| 15 | 11.081 | L1.46 |
| 16 | 33.449 | H2.3 |
| 17 | 19.429 | L1.46 |
| 18 | 114.822 | H2.3 |
| 19 | 197.669 | L1.46 |
| 20 | 24.718 | H2.3 |
| 21 | 203.624 | L1.46 |
| 22 | 71.495 | H2.3 |
| 23 | 4.13 | L1.46 |
| 24 | 55.526 | H2.3 |
| 25 | 191.117 | L1.46 |
| 26 | 3.784 | H2.3 |
| 27 | 194.723 | L1.46 |
| 28 | 55.417 | H2.3 |
| 29 | 0.816 | L1.46 |
| 30 | 70.98 | H2.3 |
| 31 | 188.179 | L1.46 |
| 32 | 61.22 | H2.3 |
| 33 | 10.514 | L1.46 |
| 34 | 59.358 | H2.3 |
| 35 | 179.975 | L1.46 |
| 36 | 123.674 | H2.3 |
| 37 | 183.74 | L1.46 |
| 38 | 48.608 | H2.3 |
| 39 | 6.998 | L1.46 |
| 40 | 67.535 | H2.3 |
| 41 | 178.718 | L1.46 |
| 42 | 121.983 | H2.3 |
| 43 | 26.101 | L1.46 |
| 44 | 5.084 | H2.3 |
| | | 1.56 |

Plane substrate

Fig. 30

Fig. 31

Fig. 32

Fig. 33

Fig. 34

Fig. 35

EP 1 748 305 A1

Fig. 36

(a)

11a  L1     11      11b

21

2

(b)

11a        θ b-g    22a    11b      11

L1

22a

2

(c)

11a
θ a-g    L1   11  22a   11b

22a

(d)

θ b-air

θ a-air

Fig. 37

Fig. 38

Fig. 39

Fig. 40

Fig. 41

Fig. 42

Fig. 43

| layer number | refractive index $\lambda$ c=480nm | layer thickness (nd/$\lambda$ c) |
|---|---|---|
| medium | 1.000 | |
| 1 | 2.300 | 0.3854 |
| 2 | 1.460 | 0.3333 |
| 3 | 2.300 | 0.3140 |
| 4 | 1.460 | 0.3122 |
| 5 | 2.300 | 0.3255 |
| 6 | 1.460 | 0.3327 |
| 7 | 2.300 | 0.3139 |
| 8 | 1.460 | 0.2813 |
| 9 | 2.300 | 0.9399 |
| 10 | 1.460 | 0.2195 |
| 11 | 2.300 | 0.1844 |
| 12 | 1.460 | 0.2062 |
| 13 | 2.300 | 0.2700 |
| 14 | 1.460 | 0.3089 |
| 15 | 2.300 | 0.2668 |
| 16 | 1.460 | 0.1440 |
| 17 | 2.300 | 0.2573 |
| 18 | 1.460 | 0.2291 |
| 19 | 2.300 | 0.2816 |
| 20 | 1.460 | 0.1757 |
| 21 | 2.300 | 0.1597 |
| 22 | 1.460 | 0.8659 |
| | 1.583 | |

plane substrate

Fig. 44

Fig. 45

refractive index
λc=480nm

layer thickness
(nd/λc)

layer number

medium

| layer number | refractive index λc=480nm | layer thickness (nd/λc) |
|---|---|---|
|  | 1.000 |  |
| 1 | 2.300 | 0.0179 |
| 2 | 1.460 | 0.0864 |
| 3 | 2.300 | 0.3444 |
| 4 | 1.460 | 0.2914 |
| 5 | 2.300 | 0.3146 |
| 6 | 1.460 | 0.2983 |
| 7 | 2.300 | 0.2894 |
| 8 | 1.460 | 0.2930 |
| 9 | 2.300 | 0.3281 |
| 10 | 1.460 | 0.2292 |
| 11 | 2.300 | 0.1460 |
| 12 | 1.460 | 0.2194 |
| 13 | 2.300 | 0.2279 |
| 14 | 1.460 | 0.2715 |
| 15 | 2.300 | 0.1969 |
| 16 | 1.460 | 0.1604 |
| 17 | 2.300 | 0.1504 |
| 18 | 1.460 | 0.2886 |
|  | 1.583 |  |

plane substrate

Fig. 46

Fig. 47

(a)

(b)

Fig. 48

Fig. 49

**Material: TiO2**

Fig. 50

**Material: TiO2**

Fig. 51

| layer number | refractive index $\lambda c=800nm$ | layer thickness $(nd/\lambda c)$ |
|---|---|---|
| medium | | 1 |
| 1 | TiO2 | 0.0079 |
| 2 | 1.46 | 0.0973 |
| 3 | TiO2 | 0.2442 |
| 4 | 1.46 | 0.2620 |
| 5 | TiO2 | 0.2613 |
| 6 | 1.46 | 0.2341 |
| 7 | TiO2 | 0.0313 |
| 8 | 1.46 | 0.0040 |
| 9 | TiO2 | 0.2515 |
| 10 | 1.46 | 0.2425 |
| 11 | TiO2 | 0.2605 |
| 12 | 1.46 | 0.2300 |
| 13 | TiO2 | 0.3348 |
| 14 | 1.46 | 0.1931 |
| 15 | TiO2 | 0.2874 |
| 16 | 1.46 | 0.2138 |
| 17 | TiO2 | 0.2754 |
| 18 | 1.46 | 0.2451 |
| 19 | TiO2 | 0.1440 |
| 20 | 1.46 | 0.2012 |
| 21 | TiO2 | 0.1559 |
| 22 | 1.46 | 0.1700 |
| 23 | TiO2 | 0.2375 |
| 24 | 1.46 | 0.0863 |
| 25 | TiO2 | 0.0630 |
| 26 | 1.46 | 0.1438 |
| 27 | TiO2 | 0.0977 |
| 28 | 1.46 | 0.0633 |
| 29 | TiO2 | 0.1113 |
| 30 | 1.46 | 0.1068 |
| 31 | TiO2 | 0.0801 |
| 32 | 1.46 | 0.1024 |
| 33 | TiO2 | 0.0994 |
| 34 | 1.46 | 0.6122 |
| 35 | TiO2 | 0.3288 |
| 36 | 1.46 | 0.2878 |
| 37 | TiO2 | 0.0427 |
| 38 | 1.46 | 0.0143 |
| 39 | TiO2 | 0.1756 |
| 40 | 1.46 | 0.0442 |
| 41 | TiO2 | 0.0143 |
| 42 | 1.46 | 0.0188 |
| 43 | TiO2 | 0.0358 |
| 44 | 1.46 | 0.1035 |
| 45 | TiO2 | 0.0041 |
| 46 | 1.46 | 0.0631 |
| 47 | TiO2 | 0.0145 |
| 48 | 1.46 | 0.6557 |
| plane substrate | 1.583 | |

Fig. 52

Fig. 53

Fig. 54

Fig. 55

Fig. 56

layer number
refractive index λc=800nm
layer thickness

medium

| layer number | refractive index λc=800nm | (nd/λc) | number of layers from plane substrate |
|---|---|---|---|
| | 1 | | |
| 1 | 2.30 | 0.1097 | |
| 2 | 1.46 | 0.0988 | |
| 3 | 2.30 | 0.3028 | |
| 4 | 1.46 | 0.3052 | |
| 5 | 2.30 | 0.0836 | |
| 6 | 1.46 | 0.0003 | |
| 7 | 2.30 | 0.0870 | |
| 8 | 1.46 | 0.0618 | |
| 9 | 2.30 | 0.2811 | |
| 10 | 1.46 | 0.2928 | |
| 11 | 2.30 | 0.2888 | |
| 12 | 1.46 | 0.1273 | |
| 13 | 2.30 | 0.1130 | |
| 14 | 1.46 | 0.2861 | |
| 15 | 2.30 | 0.2756 | |
| 16 | 1.46 | 0.0372 | |
| 17 | 2.30 | 0.1238 | 11 |
| 18 | 1.46 | 0.1314 | 10 |
| 19 | 2.30 | 0.2818 | 9 |
| 20 | 1.46 | 0.2564 | 8 |
| 21 | 2.30 | 0.3027 | 7 |
| 22 | 1.46 | 0.3368 | 6 |
| 23 | 2.30 | 0.4573 | 5 |
| 24 | 1.46 | 0.0129 | 4 |
| 25 | 2.30 | 0.3967 | 3 |
| 26 | 1.46 | 0.0567 | 2 |
| 27 | 2.30 | 0.0415 | 1 |
| | | 1.583 | |

medium

plane substrate

25% transmittance of the center area of the light-reducing film

50% transmittance of the peripheral area of the light-reducing film

Fig. 57

Fig. 58

Fig. 59

Fig. 60

Fig. 61

Fig. 62

Fig. 63

## Fig. 64

extinction
coefficient

transmittance
of plane substrate

| k2 | (%) |
|---|---|
| 0.000000 | 92.141695 |
| 0.000001 | 90.053577 |
| 0.000002 | 88.013074 |
| 0.000005 | 82.166342 |
| 0.000010 | 73.276057 |
| 0.000020 | 58.286227 |
| 0.000050 | 29.353958 |
| 0.000070 | 18.585224 |
| 0.000100 | 9.364052 |
| 0.001000 | 0.000000 |
| 0.010000 | 0.000000 |

Fig. 65

Fig. 66

## INTERNATIONAL SEARCH REPORT

| International application No. |
| --- |
| PCT/JP2005/007038 |

A. CLASSIFICATION OF SUBJECT MATTER
    Int.Cl$^7$  G02B5/00, 5/32, 27/02

According to International Patent Classification (IPC) or to both national classification and IPC

B. FIELDS SEARCHED

Minimum documentation searched (classification system followed by classification symbols)
    Int.Cl$^7$  G02B5/00, 5/32, 27/02

Documentation searched other than minimum documentation to the extent that such documents are included in the fields searched
    Jitsuyo Shinan Koho          1922-1996    Jitsuyo Shinan Toroku Koho    1996-2005
    Kokai Jitsuyo Shinan Koho    1971-2005    Toroku Jitsuyo Shinan Koho    1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2002-162598 A  (Olympus Optical Co., Ltd.),<br>07 June, 2002 (07.06.02),<br>Full text; all drawings<br>(Family: none) | 1,3-5,19-21<br>2,6-18 |
| Y<br>A | JP 10-319240 A  (Fuji Xerox Co., Ltd.),<br>04 December, 1998 (04.12.98),<br>Full text; all drawings<br>(Family: none) | 1,3-5,19-21<br>2,6-18 |
| Y<br>A | JP 2002-296536 A  (Nikon Corp.),<br>09 October, 2002 (09.10.02),<br>Full text; all drawings<br>(Family: none) | 1,3-5,19-21<br>2,6-18 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    03 August, 2005 (03.08.05) | Date of mailing of the international search report<br>    23 August, 2005 (23.08.05) |
| --- | --- |
| Name and mailing address of the ISA/<br>    Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2005/007038

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | US 2002/0167463 A1  (Kazutaka INOGUCHI),<br>14 November, 2002 (14.11.02),<br>Full text; all drawings<br>& JP 2002-228970 A | 19<br>1-18,20,21 |
| Y<br>A | US 2004/0032666 A1  (Tomoyuki BABA),<br>19 February, 2004 (19.02.04),<br>Full text; all drawings<br>& JP 2004-77825 A | 19<br>1-18,20,21 |
| Y<br>A | WO 01/95027 A2  (LUMUS LTD.),<br>13 December, 2001 (13.12.01),<br>Full text; all drawings<br>& JP 2003-536102 A | 19<br>1-18,20,21 |
| A | US 2001/0033401 A1  (MINOLTA CO., LTD.),<br>25 October, 2001 (25.10.01),<br>Full text; all drawings<br>& JP 2001-264682 A | 1-21 |
| A | EP 0772103 A2  (Denso Corp.),<br>07 May, 1997 (07.05.97),<br>Full text; all drawings<br>& JP 9-197554 A | 1-21 |

Form PCT/ISA/210 (continuation of second sheet) (January 2004)

**EP 1 748 305 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001264682 A
- JP 2003536102 A